(19) Europäisches Patentamt
European Patent Office
Office européen des brevets

(11) **EP 4 742 185 A1**

(12) **EUROPEAN PATENT APPLICATION**

(43) Date of publication:
**13.05.2026 Bulletin 2026/20**

(21) Application number: **25210040.9**

(22) Date of filing: **21.10.2025**

(51) International Patent Classification (IPC):
*G06V 10/82* (2022.01)   *G06F 40/284* (2020.01)
*G06N 3/08* (2023.01)

(52) Cooperative Patent Classification (CPC):
**G06V 10/82; G06F 40/284; G06F 40/30;
G06F 40/56; G06N 3/045; G06N 3/08; G06N 3/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.11.2024 GR 20240100796**

(71) Applicant: **Samsung Electronics Co., Ltd.
Suwon-si, Gyeonggi-do 16677 (KR)**

(72) Inventors:
• **MANIADIS, Ioannis
Chertsey, KT16 0RS (GB)**

• **OUALI, Yassine
Chertsey, KT16 0RS (GB)**
• **BULAT, Adrian
Chertsey, KT16 0RS (GB)**
• **TZIMIROPOULOS, Georgios
Chertsey, KT1 0RS (GB)**
• **ZAGANIDIS, Anestis
Chertsey, KT16 0RS (GB)**
• **ALONSO, Brais Martinez
Chertsey, KT16 0RS (GB)**
• **XENOS, Alexandros
Chertsey, KT16 0RS (GB)**

(74) Representative: **Appleyard Lees IP LLP
G Mill
Dean Clough Industrial Park
Halifax HX3 5AH (GB)**

(54) **A METHOD FOR GENERATING A DISCRIMINATIVE LARGE VISION-LANGUAGE MODEL**

(57) Broadly speaking, embodiments of the present techniques provide a method for transforming a generative large vision language model, LVLM, into a discriminative large vision language model, LVLM.

FIGURE 1

EP 4 742 185 A1

**Description**

**Field**

The present application generally relates to a method for generating a discriminative large vision-language model. In particular, the present application provides a method for transforming a generative large vision language model, LVLM, into a discriminative large vision language model, LVLM.

**Background**

Contrastively-trained Vision Language Models (VLMs) (e.g. CLIP) have become the predominant direction for vision-language representation learning, exhibiting remarkable zero-shot abilities. However, the great success of these models in many vision-language and vision tasks, even in a zero-shot manner, "sweeps under the rug" some of their important limitations. Specifically, such models struggle to exhibit advanced language understanding capabilities, suffer from a limited understanding of compositionality, and manifest a bag of words behaviour. (A bag of words behaviour is where a model uses frequency of words to represent text, but in doing so, loses the semantic meaning and context of the text.) For example, even with bag of words behaviour, VLMs have shown remarkable zero-shot retrieval accuracy on the Flickr and COCO datasets. Still, they perform poorly on a simple word order permutation task on the same datasets. Unfortunately, these issues persist even when the model and the dataset size increase.

Concomitantly, inspired by the success of LLMs in acting as generalist assistants, a series of works combine pretrained vision encoders and LLMs to construct Large Vision-Language Models (LVLMs) capable of performing interactive multi-modal conversations. Among others, these models have been shown capable of exhibiting strong reasoning and vision-language understanding capabilities, offering fine-grained and detailed responses. However, they are trained with a next-token prediction loss in an autoregressive manner, which appears less suitable for direct utilization in discriminative image-text tasks (e.g. image-text retrieval).

A generative LVLM is one which can generate new images and/or new text from an input prompt (that may be an image or text). For example, a generative LVLM may be able to generate a new image given an input image, or may be able to generate a description or caption for the input image. A generative LVLM could generate new photos of animals that look like real animals.

A discriminative LVLM is one which can discriminate between different types of input instances. For example, a discriminative LVLM could distinguish between a dog and a cat in input images.

The present applicant has therefore identified the need for improved LVLMs.

**Summary**

In a first approach of the present techniques, there is provided a computer-implemented method for generating a discriminative large vision language model, LVLM, for performing image-based tasks, the method comprising: obtaining a pre-trained generative LVLM for generating images and/or text, wherein the pre-trained generative LVLM comprises: a large language model, LLM, and a vision encoder; obtaining a training dataset comprising input images, wherein each input image has at least one text caption and wherein each text caption is either a short caption or a long caption; and training the pre-trained generative LVLM to perform discriminative image-based tasks, by: for each input image of the training dataset having a short caption: generating, using the LVLM, an image embedding for the input image and a text embedding for the short caption; and minimising a contrastive training loss using the generated image embedding and text embedding; and for each input image of the training dataset having a long caption: generating, using the LLM, a predicted long caption for the input image; and minimising an autoregressive training loss between the long caption for and the predicted long caption; wherein the contrastive training loss and autoregressive training loss are minimised jointly.

Advantageously, the present techniques overcome the problems with existing vision-language models and provide an LVLM which has enhanced language understanding and can be used for generative image-based tasks (e.g. image generation from text prompts) and discriminative image-based tasks (e.g. image retrieval or image description/-captioning). The present techniques solve the problems by introducing two training losses - one based on short captions and one based on long captions. As explained in more detail below, the short captions are used to ensure that the LVLM is able to correctly understand images, by ensuring a text embedding produced by the LLM for the short caption is similar to/substantially matches an image embedding produced by the LLM (aided by the vision encoder). Thus, the LLM is trained to understand both text and image features. The long captions are used to ensure that the LVLM does not exhibit bag of words behaviour and has better semantic understanding of images. By optimising both losses jointly, the resulting trained LVLM is able to capture and summarise coarse details in images as well as capture and understand finer details in images.

The terms "short caption" and "long caption" are relative terms which refer to the number of tokens in each caption. Tokens may be whole words, characters, or sub-words, which are analysed separately by LLMs. It will be understood that the long caption contains more tokens than the short captions. A non-limiting example is a short caption having up to 30 tokens and a long caption having over 100 tokens.

An embedding is a representation of values or objects, like text, images or audio, that can be understood and processed by machine learning models. An embedding usually takes the form of a vector, and thus the terms "embedding" and "embedding vector" are used interchangeably herein. An embedding is therefore a mathematical representation of a data item (e.g. text, image, video, audio, etc.), and may represent some or all of the content of the data item. For example, an embedding may represent the semantic meaning of a data item. Embeddings make it possible for machine learning models to understand the relationships between different data items. Embeddings are normally analysed within embedding space, i.e. a mathematical space in which similar items are positioned closer to one another than less similar items. For example, if embedding A for data item A is close to embedding B for data item B in embedding space, then data item A and data item B are similar in some way.

A vision encoder is a neural network model that is able to process an input image and output a single vector representing the visual content of the input image. An example vision encoder is the CLIP encoder.

The step of generating an image embedding for the input image may comprise: inputting, into the LLM, the input image together with a first prompt, wherein the first prompt causes the LLM to generate a first short summary of the input image; generating, using the LLM, the first short summary of the input image; and generating, using the LLM, an image embedding for the first short summary. That is, the image embedding, $\mathbf{f}_v$, may be obtained by passing the input image alongside a handcrafted first (image) prompt through the LVLM and taking the output representation of the last token.

The first prompt may be, for example "in one word, describe the image". Thus, inputting the input image together with a first prompt may comprise: inputting the input image together with a first prompt to generate a first single word summary of the input image.

Typically, it may not be possible to input the first prompt and image directly into the LLM and get good results. It may instead be necessary to input an initial image embedding into the LLM together with the first prompt, so that the LLM is operating on an embedding that it can understand, rather than a raw image that it may not understand. Thus, inputting the input image may comprise inputting an initial image embedding for the image into the LLM.

Preferably, the initial image embedding is generated using the part of the LVLM that is good at processing images, i.e. the vision encoder. However, the LLM may not be able to readily understand an embedding produced by a vision encoder because the embedding is based on image features and is therefore a representation in vision/image space, but the LLM operates in text space. Thus, the method may further comprise generating the initial image embedding by: generating, using the vision encoder, a vision embedding for the input image, wherein the vision embedding encodes vision features extracted from the input image by the vision encoder and wherein the vision embedding is in a vision embedding space; and converting, using a projector module of the LVLM, the vision embedding from the vision embedding space into the initial image embedding in a textual embedding space. Accordingly, the projector module helps the LLM to understand the output from the vision encoder.

Thus, the steps to generate an image embedding, $\mathbf{f}_v$, that encapsulates features of the image have been described. For the contrastive training, it is also necessary to generate a text embedding, $\mathbf{f}_t$, that encapsulates features of the short caption associates with the image. The goal of the contrastive training is to ensure that the image and text embeddings for image-text pairs are close to each other in textual embedding space.

When the text caption is a short caption, generating a text embedding for the short caption may comprise: inputting, into the LLM, the short caption together with a second prompt to generate a second short summary of the short caption; generating, using the LLM, the second short summary of the short caption; and generating, using the LLM, a text embedding for the second short summary. Thus, the LLM does not generate a text embedding for the short caption itself, but for a summary based on the short caption.

The second prompt may be, for example "in one word, describe the text". Thus, inputting the short caption together with a second prompt may comprise: inputting the short caption together with a second prompt to generate a second single word summary of the short caption.

Generally speaking, the step of minimising a contrastive training loss, $\mathcal{L}_c$, may comprise: calculating a similarity between the generated image embedding and text embedding for each image having a short caption; and minimising the contrastive training loss by adjusting parameters of the LLM to increase the calculated similarity between the generated image embeddings and text embeddings. In other words, the image and text embeddings must be close if they are semantically similar, and this is enforced using a symmetric image-text and text-image contrastive loss.

For the autoregressive training, it is desirable for the LLM to be able to predict a long caption for an input image, where a long caption for the input image already exists. That is, the training is used to cause the LLM to generate a long caption that is substantially similar to the existing long caption, though the LLM is only provided with the image and not the existing long caption.

The step of generating, using the LLM, a predicted long caption for the input image may comprise: inputting, into the LLM, the input image together with a third prompt to generate a predicted long caption of the input image. The third prompt may be, for example "describe the image in detail".

The long caption is generate using a next-token prediction technique. Thus, it may be necessary to start the process using a <BOS> (beginning of sentence) indicator, which is used to signal the initial token for the start of generation. Thus, generating, using the LLM, a predicted long caption for the input image may comprise: selecting an initial token (<BOS>) for the predicted long caption based on the input image and the third prompt, wherein the predicted long caption comprises a sequence of a plurality of tokens; and predicting each subsequent token in the sequence for the predicted long caption based on the previous token in the sequence.

Generally speaking, minimising an autoregressive training loss, $\mathcal{L}_{CE}$, may comprise: minimising an autoregressive training loss by adjusting parameters of the LLM to increase a probability that each token in the predicted long caption matches each token in the long caption for the input image. In other words, the autoregressive training loss enables the LLM to learn from long captions, by predicting each and every token correctly. The loss is guided by the existing long caption for the input image. That is, it is desirable for the existing long caption and the generated long caption to be similar.

In some cases, obtaining a training dataset comprising input images having text captions may comprise: obtaining a plurality of images; and generating the at least one caption for each image using at least one trained ML model. This may be the case when input images having text captions do not readily exist. How the captions may be generated to form the training dataset is described below with reference to the Figures.

In any case, the step of obtaining a training dataset comprising input images having text captions may comprise: obtaining a plurality of images, each image having a short caption that is up to 30 tokens in length, and/or a long caption that is greater than or equal to 200 tokens in length. It will be understood that the caption lengths may vary - the key is that there is a large difference between the short and long caption lengths to ensure effective training for both tasks.

Fine-tuning of a trained LVLM is generally computationally expensive because of the sheer number of parameters of the LVLM. Thus, the present techniques may utilise parameter-efficient training to reduce the computational time and energy required for the fine-tuning. This may be achieved by using lor-rank adapters.

Generally speaking, a low-rank adapter, LoRA, involves training and storing the additional weight changes of a model (which relate to adapting the model for a new, related task) in a matrix, while freezing all the already-learned/pre-trained model weights. LoRA decomposes the weight change matrix ΔW into two low-rank matrices A and B. Instead of directly training the parameters in ΔW, LoRA trains the parameters in the A and B matrices. The original pre-trained weight matrix of the model is WO with a dimension of d * d, and this is frozen during model training for other tasks. The updated matrix is ΔW with dimension d * d as well. The dimension of matrix A is r * d, and the dimension of matrix B is d * r. When training is completed, WO (the original weights of the model) and ΔW (the changed weights of the model after training on a specific downstream task) will be stored separately. When a new input x enters the LoRA fine-tuned model to be processed by the model, x will be multiplied with W and ΔW separately to generate two vectors (of the same dimension). The two vectors are summed coordinate-wise to generate the final output h, such that h = W0x + ΔWx = W0x + BAx. Thus, training LoRA adapters instead of training the LVLM directly may be computationally more efficient.

Thus, generating, using the LLM, an image embedding for the input image and a text embedding for the short caption may comprise using a low-rank adapter for the LLM. As a result, minimising a contrastive training loss using the generated image embedding and text embedding may comprise adjusting parameters of the low-rank adapter rather than the LVLM parameters directly.

Similarly, generating, using the LLM, a predicted long caption for the input image may comprise using a low-rank adapter for the LLM. As a result, minimising an autoregressive training loss between the long caption for and the predicted long caption comprises adjusting parameters of the low-rank adapter.

Preferably, the same low-rank adapter is used for both the contrastive training and the autoregressive training tasks. The only difference is the inputs into the adapter for the two tasks.

In a second approach of the present techniques, there is provided a server for generating a discriminative large vision language model, LVLM, for performing image-based tasks, the server comprising: at least one processor coupled to memory for: obtaining a pre-trained generative LVLM, wherein the pre-trained generative LVLM comprises: a large language model, LLM, and a vision encoder; obtaining a training dataset comprising input images, wherein each input image has at least one text caption and wherein each text caption is either a short caption or a long caption; and training the pre-trained generative LVLM to perform discriminative image-based tasks, by: for each input image of the training dataset having a short caption: generating, using the LVLM, an image embedding for the input image and a text embedding for the short caption; and minimising a contrastive training loss using the generated image embedding and text embedding; and for each input image of the training dataset having a long caption: generating, using the LLM, a predicted long caption for the input image; and minimising an autoregressive training loss between the long caption for and the predicted long caption; wherein the contrastive training loss and autoregressive training loss are minimised jointly.

The features described above with reference to the first approach apply equally to the second approach and therefore, for the sake of conciseness, are not repeated.

The server may comprise at least one processor coupled to memory and arranged for implementing the methods described herein. The memory may store instructions that, when executed by the at least one processor individually or collectively, cause the at least one processor to perform the methods described herein.

In a third approach of the present techniques, there is provided a computer-implemented method for using a trained discriminative large vision language model, LVLM, on a user device, wherein the LVLM has been trained using the methods described herein (e.g. with reference to the first technique), the method comprising: obtaining a user query in relation to an image; generating, using the trained LVLM to process the user query, a response to the user query; and outputting the generated response.

One example task for the trained LVLM is to describe or caption images. This may be useful for many purposes, such as for helping visually-impaired people to navigate different situations. Therefore, image captioning may help to improve content accessibility for people by describing the images to them.

In this example, obtaining a user query in relation to an image may comprise obtaining an image and a user text query to describe the image. The method may comprise: generating, using the trained LVLM to process the user query, a long caption; and outputting the generated long caption to a display of the user device. In some cases, the generated long caption may be read out to the user via a speaker of the user device.

Another example task for the trained LVLM is to retrieve or search for images based on a user query (e.g. "find pictures of my dog running in a park"). This may help users to find images they have captured and which are stored in their image stores/photo galleries. Many users have thousands of images, and so searching for them by viewing each image would be very time-consuming.

In this example, obtaining a user query in relation to an image may comprise obtaining a user text query to retrieve at least one image from a plurality of images stored on the user device. The method may comprise: generating, using the trained LVLM to process the user query, a text embedding for the user text query; searching the plurality of images to identify an image having an image embedding that is most similar to the generated text embedding; and outputting the identified image to a display of the user device.

In a fourth approach of the present techniques, there is provided an electronic user device for using a trained discriminative large vision language model, LVLM, on a user device, wherein the LVLM has been trained using the methods described herein, the electronic user device comprising: at least one processor coupled to memory for: obtaining a user query in relation to an image; generating, using the trained LVLM to process the user text query, a response to the user query; and outputting the generated response.

The user device comprises at least one processor and memory storing instructions that, when executed by the at least one processor individually or collectively, cause the user device to perform the methods described herein.

The user device may further comprise: a user interface for receiving a user query; and a display.

The user device may be a constrained-resource device, but which has the minimum hardware capabilities to use a trained model. The user device may be a smart device. The user device may be a smartphone. A smartphone is an example of a smart device. The user device may be a smart appliance. A smart appliance is another example of a smart device. An example of a smart appliance is a smart television (TV), a smart fridge, a smart oven, a smart vacuum cleaner, a smart robotic device, and so on. More generally, the user device may be a constrained-resource device, but which has the minimum hardware capabilities to use a trained ML model and/or to train an ML model. The user device may be any one of: a smartphone, tablet, laptop, computer or computing device, virtual assistant device, a vehicle, an autonomous vehicle, a robot or robotic device, a robotic assistant, image capture system or device, an augmented reality system or device, a virtual reality system or device, a gaming system, an Internet of Things device, or a smart consumer device (such as a smart fridge, smart vacuum cleaner, smart lawn mower, smart oven, etc). It will be understood that this is a non-exhaustive and non-limiting list of example user devices.

The electronic user device may further comprise: storage storing a plurality of images; and at least one user interface; wherein the at least one processor is configured for: obtaining, via the display, an image and a user text query to describe the image; generating, using the trained LVLM to process the user query, a long caption; and outputting the generated long caption to the user interface of the user device. The user interface may be a display and/or an audio output device/ speaker.

The electronic user device may further comprise: storage storing a plurality of images; and a display; wherein the at least one processor is configured for: obtaining, via the display, a user query to retrieve at least one image from the storage; generating, using the trained LVLM to process the user query, a text embedding for the user text query; searching the plurality of images in storage to identify an image having an image embedding that is most similar to the generated text embedding; and outputting the identified image to the display.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The method described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The AI model may consist of a plurality of neural network layers. Each layer has a plurality of weight values, and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of the drawings**

Implementations of the present techniques will now be described, by way of example only, with reference to the accompanying drawings, in which:

Figure 1 is a block diagram showing the overall VladVA framework of the present techniques;
Figure 2 shows graphs of entropy of the output probability distribution at the next-to-be-predicted token location;
Figure 3 shows graphs of cumulative variance of the image and text embedding matrices over a set of 50 prompts;
Figure 4 is a diagram showing top-k next-to-be-predicted tokens before and after VladVA fine-tuning;
Figure 5 is a graph showing image and text retrieval score on Flickr30k over a set of 50 image-text prompts ordered by their entropy scores;
Figure 6 depicts example templates used during training;
Figure 7 is a table showing results of experiments to compare zero-shot text-image retrieval accuracy;
Figure 8 is a table showing results of experiments to compare the present techniques with state-of-the-art, performed on the SugarCrepe compositionality benchmark;
Figure 9 is a table showing results of experiments to compare the present techniques with state-of-the-art, performed on the SugarCrepe++ compositionality benchmark;
Figure 10 is a table showing impact of adaptation components and AR loss;
Figure 11 is a table showing impact of training data size;
Figure 12 is a flowchart of example steps of a method for generating a discriminative large vision language model, LVLM, for performing image-based tasks;
Figure 13 is a flowchart of example steps to perform parts of the contrastive training;
Figure 14 is a flowchart of example steps to perform parts of the autoregressive training;
Figure 15 is a flowchart of example steps of a method for using a trained discriminative large vision language model, LVLM, on a user device; and
Figure 16 is a block diagram of a system for fine-tuning a pre-trained LVLM and using the fine-tuned LVLM.

**Detailed description of the drawings**

Broadly speaking, embodiments of the present techniques provide a method for transforming a generative large vision language model, LVLM, into a discriminative large vision language model, LVLM.

The very recent (concurrent) work by Jiang et al is the first one to show that, with appropriate prompting, LVLMs can serve as zero-shot discriminative models. Importantly, Jiang et al advocates for a text-text optimization approach, stating that contrastive image-text fine-tuning has a detrimental effect on the model's performance. In contrast to Jiang et al, the present techniques provide a new training framework for discriminative image-text fine-tuning of LVLMs, aiming to convert the original *generative* LVLM into a *discriminative* one, thereby significantly enhancing its capability for image-text discrimination while preserving the compositional strengths of the original model.

In the present techniques, following the (independent) two-towers paradigm, the vision embeddings are produced by passing the image through the entire LVLM, and the text embeddings by passing the text through the LLM of the LVLM. Intuitively, for the vision embedding, the LLM acts as an information processor that refines the visual information while simultaneously aligning it with the textual representations. The present techniques are also referred to herein as **VladVA: V**ision-Language **A**daptation for **D**iscriminative **V**isual **A**ssistant. Some of the **contributions** of the present techniques include:

- A carefully designed optimization framework that utilizes image-text pairs of variable length and granularity for model training (i.e. both short and long captions). Using this data, the model is trained with both contrastive and next-token prediction losses, which are both shown to be necessary for unlocking strong discrimination and compositionality capabilities. The present design choices are accompanied by ablation studies, which justify the necessity of the present framework's components.
- To facilitate efficient training, it is shown that the model can be fine-tuned using a parameter-efficient adaptation method based on a combination of soft prompting and LoRA adapters. The positive impact of both components is shown.

- Significant improvements over state-of-the-art two-tower models are reported (e.g. CLIP-like models) of similar size on standard image-text retrieval benchmarks (+4.7-7.0% gains in absolute terms). Moreover, notable gains on several vision-language understanding and compositionality benchmarks are reported (up to +15%).

Prior to explaining the present techniques in detail, some existing works are described to provide context for understanding the advantages of the present techniques.

*Large Vision Language Models (LVLMs):* Inspired by breakthrough research in language modeling, a series of methods seek to combine pretrained LLMs and vision encoders to construct Large Vision Language Models (LVLMs) capable of processing image-text data jointly. The prevalent strategy consists in aligning the features produced by a pretrained vision encoder to the textual space assumed by a pretrained LLM using a projection module, LLaVA, following a two-stage alignment procedure. Follow-up works expand this to interleaved image-text data and multiple input crops while seeking to improve the model's efficiency.

Despite their strong generative and comprehension abilities, current LVLMs are primarily restricted to generative tasks. Only very recently, Jiang et al, inspired by the recent progress in NLP adapted a LLaVA-NeXT model to discriminative tasks using a contrastive-like loss and text data only. In contrast to Jiang et al, the present techniques introduce a training framework that learns from multi-turn image-text pairs (as opposed to text only) using a novel formulation that jointly combines a contrastive loss with a next-token prediction, reflecting the data characteristics and inducing a gradual representation buildup. Concurrently, VLM2Vec adapts an LVLM for multi-modal retrieval. However, it uses a different loss and training strategy (no generative loss, no short-long captions training, no soft prompting). The present approach is compares with both E5-V and VLM2Vec, significantly improving upon their results despite using smaller/lighter models.

*Discriminative Vision-Language Models:* The prevalent approach for training Discriminative VLMs follows the two-tower contrastive approach pioneered by CLIP, whereby an image and text encoder are trained on web-collected image-text pairs to learn a joint multi-modal (i.e. vision and language) space. Subsequent works build upon CLIP by scaling the data, improving the architecture using late/early interactions or improving the training loss. Despite their remarkable zero-shot and representation learning abilities such models were shown to have significant shortcomings related to limited language understanding capabilities, including: lack of compositionality understanding, manifesting *bag of words* behaviour, struggling with spatial relations, being susceptible to typographical attacks. Recent works aim to address these shortcomings by constructing synthetic hard negatives or performing cross-modality attention. However, the former does not inherently change the model's behaviors and has been shown to potentially learn a series of shortcuts/artifacts. Meanwhile, the latter is impractical for deployment at scale, as, due to the interactions between the encoders, each new query incurs an additional inference for every image within the set.

To alleviate these shortcomings and improve the overall capabilities of such models, the present techniques depart from the prevalent approach of training VLMs using a contrastive loss and, instead, propose a new approach that seeks to convert generative LVLMs into discriminative models by adapting them using a newly proposed framework that combines generative and discriminative objectives.

Method

The present techniques, referred to as VladVA (**V**ision-**L**anguage **A**daptation for **D**iscriminative **V**isual **A**ssistant), provide a novel approach for discriminative fine-tuning of LVLMs that results in strong discriminative and compositional capabilities.

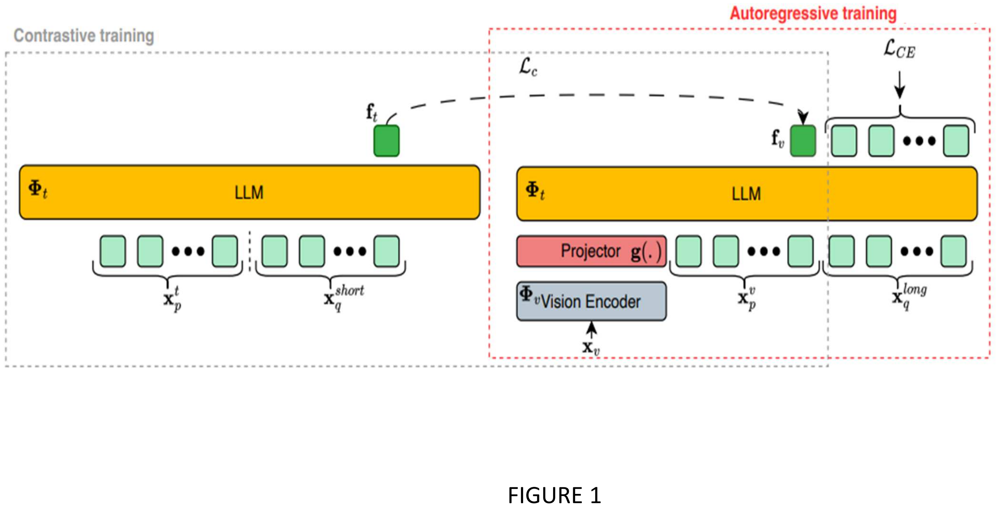

Figure 1 is a block diagram showing the overall VladVA framework. A generative LVLM comprising an LLM and a vision encoder is adapted into a discriminative model with the help of (1) a contrastive training loss, and (2) an autoregressive loss. The first training loss is applied on image-text pairs with short(er) captions (as shown on the left of Figure 1), encouraging the last token produced by both modalities to be discriminative. The second training loss, jointly optimized with the first one, is applied only on longer captions and allows the model to learn fine-grained details (as shown on right of Figure 1). The framework is now described in more detail.

LVLMs as zero-shot discriminative models: LVLMs consist of an LLM $\Phi_t$, a vision encoder $\Phi_v$, and a module $g$ that projects the vision features into the LLM's textual space. Once fine-tuned, such models can produce a textual answer $\mathbf{x}_a = \Phi_t(g(\Phi_v(\mathbf{x}_v)), \mathbf{x}_q)$ when presented with an input image $\mathbf{x}_v$ and a text query (or prompt) $\mathbf{x}_q$.

Despite being solely trained with an autoregressive next-token prediction loss on limited amounts of data (< 5M), such models can act as multi-modal discriminative models in a zero-shot manner. To elicit this capability, the image embedding (on the right in Figure 1) $\mathbf{f}_v = \Phi_t(g(\Phi_v(\mathbf{x}_v), \mathbf{x}_p^v))[eos]$ is obtained by passing the image alongside a handcrafted image prompt $\mathbf{x}_p^v$ (e.g., "in one word, describe the image") through the LVLM and taking the output representation of the last token. Analogously, the text embedding (on the left in Figure 1) $\mathbf{f}_t = \Phi_t(\mathbf{x}_p^t, \mathbf{x}_q)[eos]$ is produced by passing the handcrafted text prompt $\mathbf{x}_p^t$ (e.g., "in one word, describe the text") and input query $\mathbf{x}_q$ through the LLM (of the LVLM) and taking again the output representation of the last token. These particular tokens are referred to as "summary tokens" (summarizing image and text information, respectively). Note that, typically, the respective handcrafted prompts for the image ($\mathbf{x}_p^v$) and text ($\mathbf{x}_p^t$) modalities are different. Finally, the similarity between an image and a text query can be computed by taking the cosine similarity between the two: $s = cos\_sim(\mathbf{f}_v, \mathbf{f}_t)$.

*What makes a good prompt?* Zero-shot adaptation by prompting already provides decent results despite the task changing from generation to discrimination. To shed some light, herein, the following are studied: (a) what makes a good prompt and (b) how can it be identified.

To answer these questions, a testbed consisting of 1,000 image-caption pairs from Flickr30k is constructed, which is then used to evaluate the quality of various prompts. The prompts (50 image-text pairs in total) are constructed using ChatGPT. Each prompt pair is fed, alongside an image and its respective caption, through the LLaVA-1.5-7B model. For each image-prompt pair and caption-prompt pair, the token embedding is extracted at the output position and the corresponding output probability distribution over the vocabulary. These are then used to compute two metrics for each prompt: the average entropy of its output distributions and the cumulative variance of its embeddings.

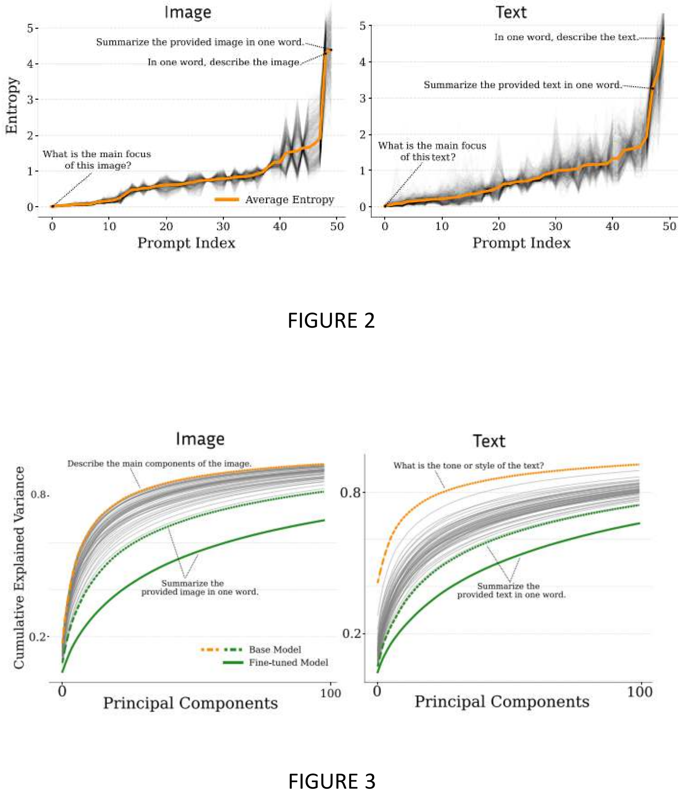

Figure 2 shows graphs of entropy of the output probability distribution at the next-to-be-predicted token location using a LLaVA-1.5-7B for a set of 50 prompts for both images and captions.

Figure 3 shows graphs of cumulative variance of the image and text embedding matrices over a set of 50 prompts on Flickr30k. Embeddings that capture more information about the input translate into a cumulative variance that requires more principal components to be explained, i.e. a higher-rank embedding matrix.

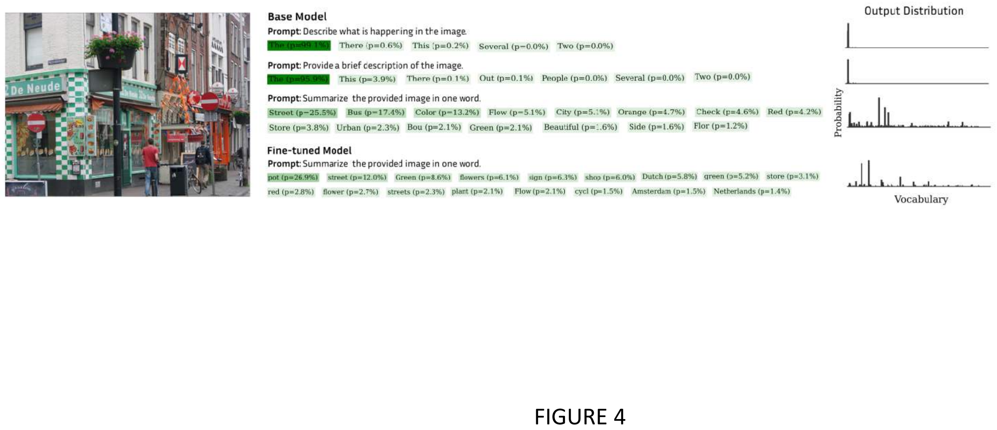

Figure 4 is a diagram showing top-k next-to-be-predicted tokens before and after VladVA fine-tuning (the present approach). On the right, the output probability distribution is shown for each case. When using the best prompt ("Summarize the provided image in one word"), the representations of the next token can encode diverse and more discriminative information, making potentially better-quality embeddings. This behavior is further improved after VladVA fine-tuning.

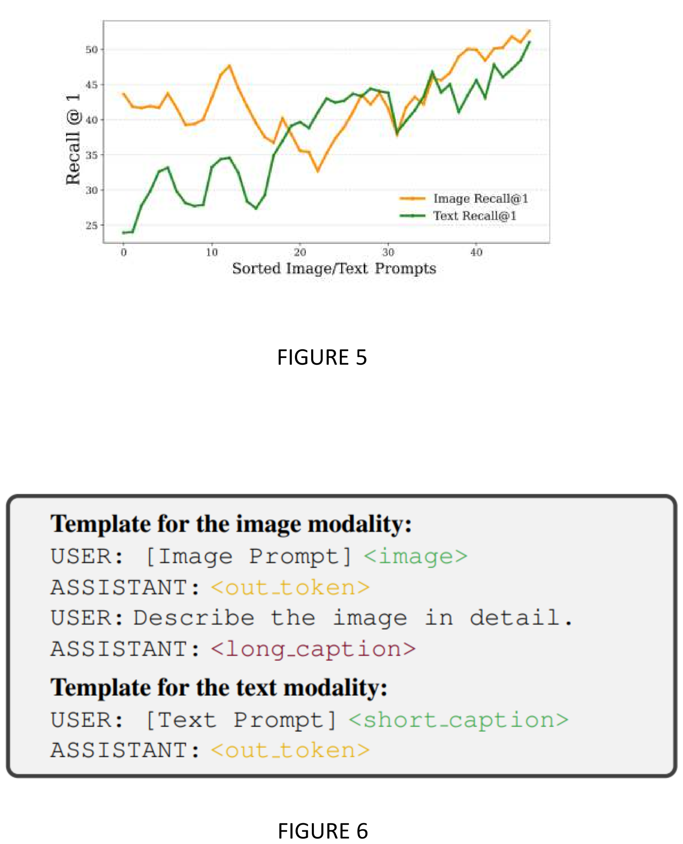

Figure 5 is a graph showing image and text retrieval score on Flickr30k over a set of 50 image-text prompts ordered by their entropy scores (Figure 2). It is observed that prompts with high average entropy scores correlate positively with the zero-shot retrieval performance.

As Figures 2 and 4 show, when the model is prompted with sentences consisting of specific keywords, such as in a few words or in one word, the model is pushed to condense the information of the image or text in the next token, resulting in an output distribution with high entropy. More importantly, when investigating the generated embeddings, it is observed that higher entropy prompts result in embeddings with more spread-out cumulative variance, requiring more principal components to capture the same amount of variance, indicating an embedding matrix with a high rank (see Figure 3). This translates into discriminative embeddings that can capture more information about the inputs, making them suitable for embedding tasks. The benefit of this behavior is illustrated in Figure 5, which shows a positive correlation between prompts with high entropy scores and the model's zero-shot retrieval performance. Hence, the present approach should seek to produce embeddings with a) spread-out variance and b) probability distributions over the vocabulary with increased entropy.

<u>Discriminative fine-tuning of LVLMs: from generation to discrimination</u>. Despite exhibiting surprising innate zero-shot abilities, LVLM's direct discriminative performance lags behind that of state-of-the-art contrastively trained VLMs. Hence, carefully designed frameworks are needed to unlock the full potential of such models. This is the very goal of the present work: to introduce a well-grounded adaptation/training framework that surfaces the discriminative image-text capabilities of a generative LVLM.

Notably, the present findings contradict those of the very recent work of Jiang et al, which found that contrastive image-text fine-tuning is detrimental and limits training to text-text contrastive learning alone. This highlights the importance of the present approach, which overcomes such impediments and significantly boosts the discriminative performance of the model.

Having established the architecture above, the two other pillars are the data and training strategy.

*Data strategy:* The present Applicant argues for the importance of data diversity in terms of granularity and group captions according to their length: short captions (< 30 tokens) and long captions (30 - 500 tokens). The short captions capture coarse details and summarize image content teaching the model to discriminate with regard to high-level image information. Longer captions capture finer image details and promote a better understanding of language concepts such as spatial relationships and compositionality. For a strong discriminative model, both are necessary. Therefore, for images missing either caption type, a BLIP2 captioner is used to generate short captions and ShareGPT-4V is used to generate long captions. This enables both supervisory signals to be leveraged for training.

*Training strategy:* As demonstrated herein, the variable length of the training data poses its own challenges: unlike the case of short captions, where training using the well-studied contrastive loss performs well, it collapses for longer captions. This explains the proposed training strategy, whereby, to address this challenge, a hybrid training approach is proposed that combines a contrastive loss and a *next-token prediction loss for discriminative adaptation.* Finally, as full model fine-tuning is computationally expensive, a fine-tuning strategy is detailed that combines adapters with soft prompting.

*Image-text contrastive alignment:* Under a multi-modal contrastive formulation, the image and text representations, $\mathbf{f}_v$ and $\mathbf{f}_t$ respectively, must be close if they are semantically similar and far apart otherwise, under a specified distance metric. At train time, this is enforced using a symmetric image-text and text-image contrastive loss, which, for a given mini-batch containing b randomly selected samples, can be described as:

$$\mathcal{L}_c = \frac{1}{b}\sum_{k=1}^{b} \left(-\log\frac{\exp(s_v^{k,k})}{\sum_j \exp(s_v^{k,j})} - \log\frac{\exp(s_t^{k,k})}{\sum_j \exp(s_t^{j,k})}\right), \tag{1}$$

where $s_v^{k,j} = cos\_sim(\mathbf{f}_v^k, \mathbf{f}_t^j)$ denotes the cosine similarity between the *k*-th image and the *j*-th caption (image-to-text), and similarity, $s_t^{k,j}$ the text-to-image similarity.

During training, the contrastive loss is applied to the very same tokens used for the zero-shot evaluation, as they represent the optimal starting point for further fine-tuning. It is noted that the contrastive loss is mostly suitable for training using short captions $\mathbf{x}_q^{short}$ (i.e. < 30 tokens), like the ones typically used for CLIP pre-training. It is found that training the model using a contrastive loss on longer captions proves challenging. Hence, to address this, below a new formulation is studied and proposed that enables discriminative training on variable-length data.

*Autoregressive training for learning discriminative LVLM representations:_Until* now, the modality-specific embeddings are obtained by taking the last token, prior to any generation, while the training is largely focused on short (i.e. < 30 tokens) captions, mimicking the CLIP-style data used for contrastive training. This contrasts with the LLaVA-style autoregressive training, where long and highly descriptive captions (typically 200-500 tokens) are used to help the LVLM learn strong links between the vision and text domains, pay attention to fine-grained details, and develop strong reasoning and compositionality capabilities.

As noted earlier, directly using the long captions with the contrastive loss is ineffective, as, due to the high specificity of the long captions, the task is easy and nearly trivial to solve, with the loss going to 0 in just a few hundred iterations. To address this, the present techniques propose to instead apply the next-token prediction loss over the long captions:

$$\mathcal{L}_{CE} = \sum_{i=1}^{L} \log p_\theta(u_i | x_v, x_p^v, x_{q,<i}^{long}), -0.2cm \tag{2}$$

where *L* is the length of the long caption $\mathbf{x}_q^{long}$, $x_v$ the input image, and $\mathbf{x}_p^v$ the prompt which prompts the model to describe the image in detail (e.g., "Describe the image in detail"), and $p_\theta$ the next-token probability distribution learned by the model.

Intuitively, this formulation possesses multiple advantages: (1) It allows the model to learn from long captions, as predicting each and every token correctly is a challenging task (as opposed to applying the contrastive loss to long captions); (2) The decoding process encourages the condensation of information into the starting token used as a feature embedding; and (3) It offers an avenue for retaining the generative capabilities of the model while strengthening its discriminative abilities.

*Overall training loss:* As depicted in Figure 1, the next-token prediction loss is applied over the long captions and the contrastive loss over the short ones in a unified manner. During training, the templates presented to the LVLM for the image and text modality take the form shown in Figure 6, with the contrastive loss applied on the output representations <out_token> for the image modality and <out_token> for the text modality. Concomitantly, the next-token prediction loss is applied on the tokens of the <long_caption>. Generally, the short caption must be sufficiently different from the long caption to prevent shortcuts during training, a property that naturally emerges in the present case due to the difference in length and annotation procedure. Note that the distinction between long and short captions is made only during training. At test time, the model is used in discriminative mode.

*Attention map between the summary and vision tokens shown for a set of heads.* Notice that post-training, the attention maps densify. This behavioral change can be interpreted as follows: For generative tasks, at every step in the generation process, the model has the chance to look back at the vision tokens, selectively attending to the regions of interest at the current step. In contrast, in a discriminative setting, the model must compress all information present in the image within the summary token.

*Parameter-efficient adaptation:* As direct fine-tuning of the LVLM is costly, especially when maintaining a reasonably large batch size for contrastive learning, herein, parameter-efficient training is adopted with soft-prompting *combined with* LoRA adapters, both trained under the same loss formulation explained above.

*Soft prompting* was recently proposed as an efficient task-adaptation approach for both LLM and CLIP models, representing a direct departure from the prompt hand-crafting solution. Specifically, for a given input modality, i.e. image and text, a set of $n$ modality($m$)-specific learnable vectors $[\mathbf{v}_1^m, \mathbf{v}_2^m, \cdots, \mathbf{v}_n^m]$, $\mathbf{v}_i^m \in \mathbb{R}^C$ is defined with $C$ denoting the model's vocabulary embedding size. These vectors can be inserted across the input sequence to adjust the model's behavior. In practice, the present techniques opt to replace the tokens belonging to the hard prompts (i.e. $\mathbf{x}_p^v$ and $\mathbf{x}_p^t$) with the learnable vectors, initializing their values with the embeddings of the handcrafted ones.

*Adapter fine-tuning:* While efficient, the representation power of the soft prompts is somewhat limited. Hence, following best practices, LoRA adapters are attached to the linear layers located inside $\Phi_t$. Such adapters offer a multifold advantage: lower memory requirements, reduced potential of overfitting during training, and no additional compute requirements during inference.

The model is fine-tuned using these components. Importantly, both have a positive impact on overall accuracy.

How does the model's behavior change? Building upon the analysis above, it is shown that the present training approach elicits the following *behavioural* changes: (1) The attention map between the summary and vision tokens increases in density. (2) Both the entropy of the output distribution of the summary token and the spread of the cumulative variance of the embeddings increase.

*The attention map densification* shows that, for discriminative tasks, the model gathers evidence from all parts of the image in order to correctly encode the information therein. This is not needed for generation, as at every generation step, the model can "peak back" at the vision tokens and select the required information.

*Entropy and cumulative variance:* As shown in Figure 3, the present approach results in models where the cumulative variance of the image and text embeddings is significantly more spread out, which translates into richer and better-aligned embeddings, capable of more accurately capturing fine-grained details. Additionally, the model maintains the diversity of output distribution at the summary token, i.e. high entropy, as illustrated in Figure 4.

Experiments

The present approach is compared with the current state-of-the-art on two tasks of interest in a zero-shot manner: image-text retrieval and compositionality/language understanding.

*Models compared:* Comparison is made with state-of-the-art models based on the two-towers (independent) approach, which is practical for retrieval purposes and also followed by the present method. A wide variety of settings are covered: different models and model sizes, training data, training losses, etc.: CLIP (ViT-L) - the original CLIP trained with a contrastive loss on 400M image-text pairs; BLIP (ViT-L) - trained on over 120M samples using contrastive, captioning and image-text matching losses; BLIP2 (T5-XXL) - improved and scaled-up version of BLIP; OpenCLIP (ViT-G/14) - scaled-up version of CLIP trained on 2B samples; OpenCLIP (ViT-BigG/14), EVA-02-CLIP (ViT-E/14+), EVA-CLIP (8B) and EVA-CLIP (18B) - large contrastively trained models, with up to 18B parameters, fine-tuned from vision encoders trained with Masked Image Modeling (MIM); E5-V (LLaVA-Next-8B) and E5-V (LLaVA-1.5-7B) - LVLMs finetuned using a text-text contrastive loss. Depending on the task, additional specialized baselines are also included (e.g. NegCLIP for compositionality).

*Training details:* A LLaVA-1.5 (7B) model is used due to its popularity and simplicity (for other models, see supp. material). For LoRA adapters, the rank and $\alpha$ is set to 16. The number of soft prompts is aligned to the length of the tokenized hand-crafted prompt. Unless otherwise stated, the models are trained for 7 epochs, using a batch size of 1024, a learning rate of 1$e$ - 4, no weight decay, and AdamW optimizer with default values for $\beta_1$ and $\beta_2$. During training, the learning rate is decayed according to a cosine scheduler. Depending on the data configuration, up to 32 A100 GPUs are used. All of the models and training procedures were implemented using PyTorch and DeepSpeed.

The following training data is used: a 4M random subset of OpenImages, CC3M (~2.8M images), and ShareGPT-4V. As no captions are available for OpenImages, these are automatically labeled with 5 captions using BLIP2. During training, only one caption is sampled at a time. For longer captions, the ShareGPT-4V data is used directly, which is extended with synthetic short captions produced by BLIP2 in order to enable the training procedure proposed above. Similarly, CC3M is automatically annotated with long captions using ShareGPT4-V.

Zero-shot image-text retrieval: The present techniques were tested on the standard Flickr30k, MS-COCO and nocaps datasets, containing 1,000, 5,000 and 15,100 test samples respectively. For the latter, the results are simply averaged on the three partitions.

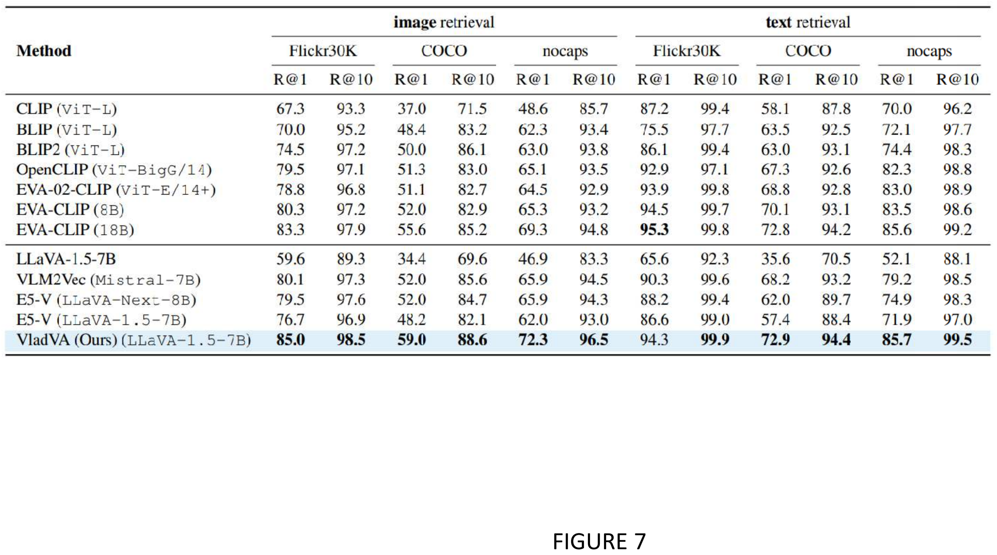

Figure 7 is a table showing results of experiments to compare zero-shot text-image retrieval accuracy on Flickr30K, COCO and nocaps.

As shown in Figure 7, across all three datasets, the present approach significantly surpasses the current state-of-the-art including models of similar size. It even outperforms the much bigger EVA-CLIP (18B) model (85.0% vs. 83.3%) on Flickr30k, (59.0% vs. 55.6%) on MS-COCO and (72.3% vs. 69.3%) on nocaps in terms of @R1 for image retrieval. Similarly, the present techniques outperform the LVLM-based E5-V model by 5.5% on Flickr30k, 7% on MS-COCO, and 6.4% on nocaps.

Image-text compositionality: Here, the focus is on the currently most challenging test sets, SugarCrepe and SugarCrepe++. For SugarCrepe++, the interest is primarily in the Image-to-Text (ITT) setting since the Text-to-Text (TOT) one evaluates the language component of the methods only.

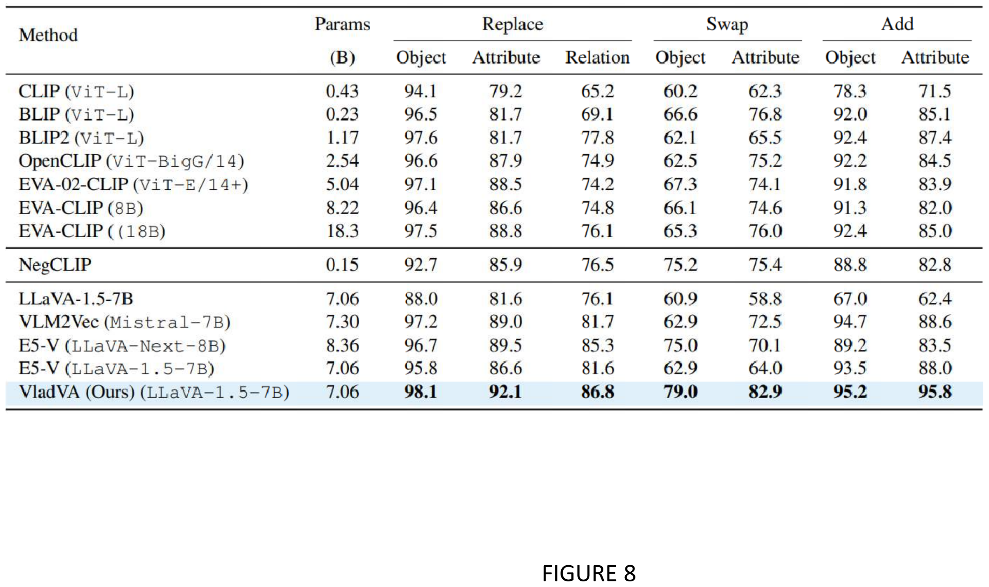

Figure 8 is a table showing results of experiments to compare the present techniques with state-of-the-art, performed on the SugarCrepe compositionality benchmark.

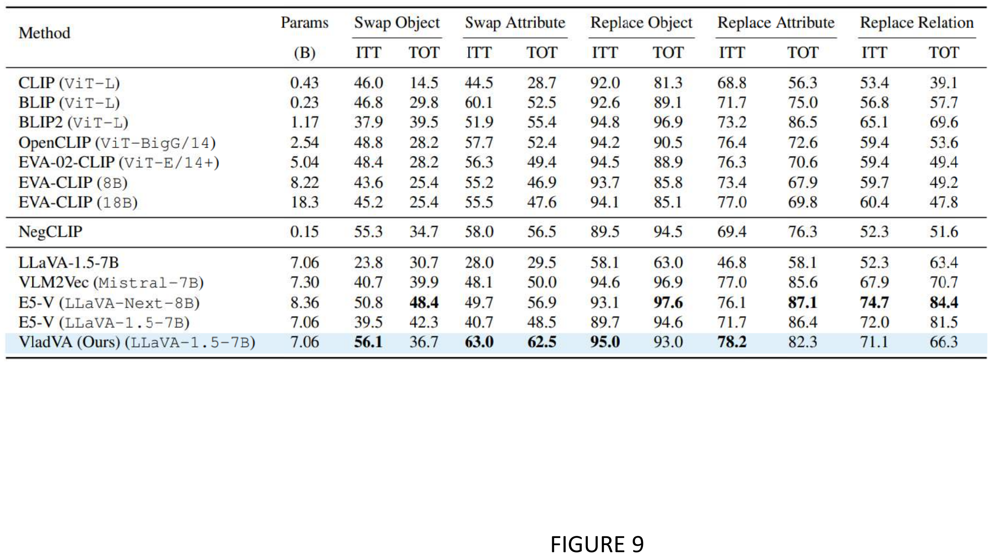

Figure 9 is a table showing results of experiments to compare the present techniques with state-of-the-art, performed on the SugarCrepe++ compositionality benchmark.

As Figures 8 and 9 show, the present approach is the best in both SugarCrepe and SugarCrepe++ (ITT). On SugarCrepe, the present techniques outperform the 18B EVA-CLIP model on all categories, with particularly large gains on relation replacement (76.1 vs. 86.8), attribution adding (85.0 vs. 95.8), and object swap (65.3 vs. 79.0). The last case is particularly interesting as it directly measures the *bag-of-words* behaviour, showcasing significant improvements offered by the present method. Additionally, the present techniques outperform the E5-V variant based on the same LLaVA-1.5-7B model that is used by the present techniques, and the one based on the heavier LLaVA-Next-8B. A similar trend is observed on SugarCreppe++ where the present techniques outperform EVA-CLIP (18B) by up to 10.9% (on object swap) and E5-V (ITT) in all but relation replacement. Thanks to its text-text training, E5-V surpasses the present method for the TOT setting, but it is noted that their loss can be readily incorporated into the present framework.

Ablation studies

*Impact of method's components:* The impact of the proposed method's components is quantified by training on a smaller 1M subset, reporting results on SugarCrepe (averaged over each category) and on Flickr30k (R@1 for T2I and I2T).

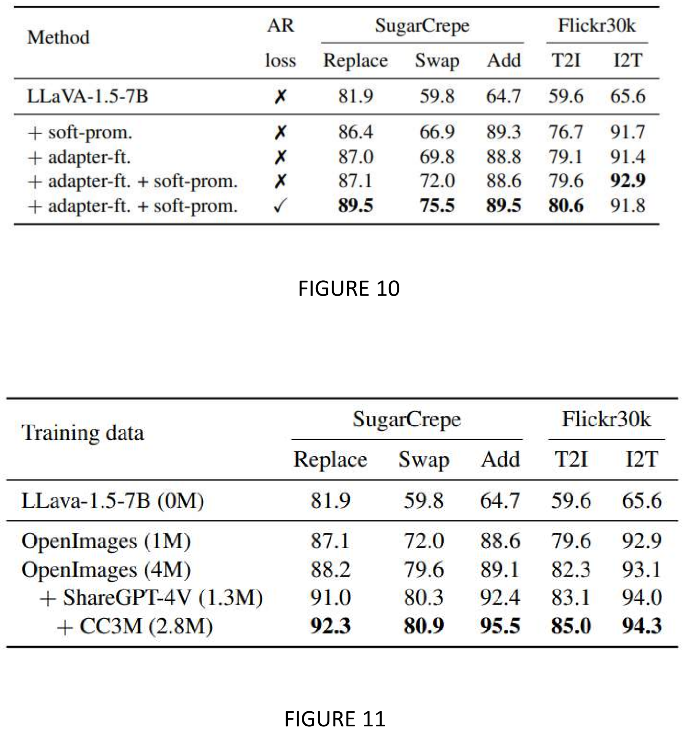

Figure 10 is a table showing impact of adaptation components and AR loss. All models are trained on 1M samples.

*Impact of adaptation components:* The impact of the efficient adaptation strategy based on soft prompting and adapter-finetuning is measured. For simplicity, this is ablated by training using only the contrastive loss. As the results from Figure 10 show, both components, individually and jointly, provide notable gains on top of the original LLaVA-1.5-7B model (i.e. the case of no adaptation).

While LoRA fine-tuning performs better than soft-prompting (due to its bigger capacity), the latter alone performs surprisingly well. To understand why, the changes the soft prompts undergo are analysed by finding the closest embedding in the LLM's vocabulary. This results in the following decoded sentences: "</s> '<Summarize the provided image in one word: / $ [" and, "$\omega$aSummarize the provided text in one word: -". The two sentences remain unchanged semantically, with the only characters changed being the ones at the start and the end of the prompt. Intuitively, this allows the model to mark/specialize the token that should gather the visual or textual evidence for discriminative tasks.

*Impact of AR loss:* The impact of the proposed autoregressive loss on long captions is measured. As Figure 10 shows, the AR loss adds a notable performance boost across all datasets tested. Finally, it is noted that using the long captions in isolation, without the proposed training strategy and loss, does not result in measurable gains.

*Impact of training dataset size:* Although at a relatively small scale (training is expensive due to the LVLM), here the aim is to examine whether scaling the dataset size benefits the proposed discriminative adaptation of LVLMs. Specifically, the dataset size is scaled from 1M to 8.1M samples.

Figure 11 is a table showing impact of training data size.

As Figure 11 shows, steady gains are achieved across all metrics, with no signs of immediate saturation. This suggests that some potential is still left untapped, and further scaling could result in extra gains.

Thus, the present techniques provide a new framework for adapting a *generative* LVLM into a *discriminative* model, unlocking its innate capability for powerful image-text discrimination and enhanced language understanding. The framework uses both short and long captions for training the LVLM with contrastive and next-token prediction losses respectively. A parameter-efficient adaptation method is also presented, using a combination of soft prompting and LoRA adapters. Finally, it is shown that the present approach results in significant improvements over state-of-the-art models of similar size for image-text retrieval and compositionality benchmarks.

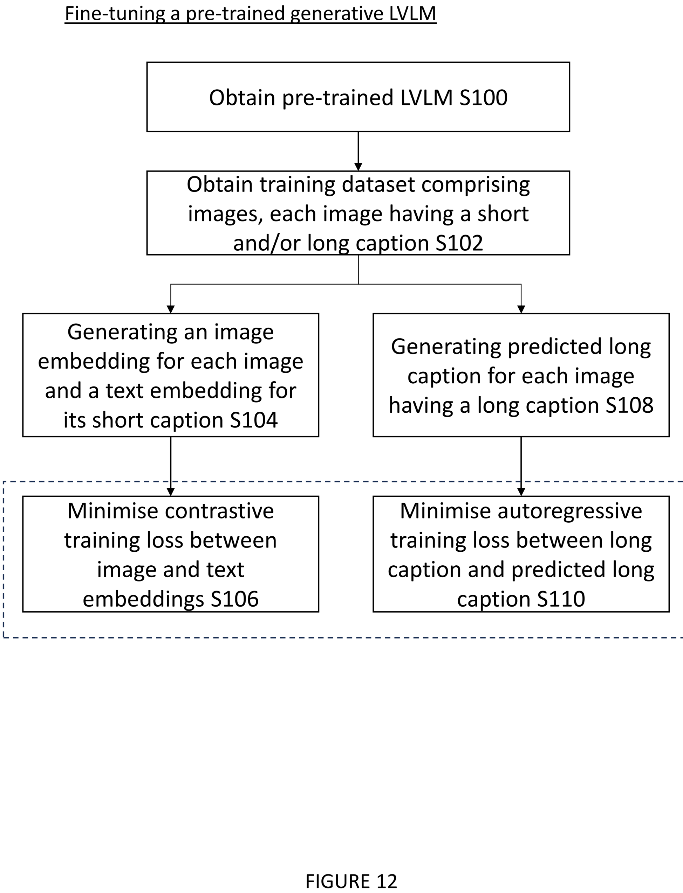

Figure 12 is a flowchart of example steps of a method for generating a discriminative large vision language model, LVLM, for performing image-based tasks. The method comprises: obtaining a pre-trained generative LVLM for generating images and/or text (step S100), wherein the pre-trained generative LVLM comprises: a large language model, LLM, and a vision encoder; obtaining a training dataset comprising input images (step S102), wherein each input image has at least one text caption and wherein each text caption is either a short caption or a long caption; and training the pre-trained generative LVLM to perform discriminative image-based tasks, by: for each input image of the training dataset having a short caption: generating, using the LLM, an image embedding for the input image and a text embedding for the short caption (step S104); and minimising a contrastive training loss using the generated image embedding and text embedding (step S106); and for each input image of the training dataset having a long caption: generating, using the LLM, a predicted long caption for the input image (step S108); and minimising an autoregressive training loss between the long caption for and the predicted long caption (step S110); wherein the contrastive training loss and autoregressive training loss are minimised jointly (as indicated by the dashed box around steps S106 and S110).

In some cases, the step (S102) of obtaining a training dataset comprising input images having text captions may comprise: obtaining a plurality of images; and generating the at least one caption for each image using at least one trained ML model. This may be the case when input images having text captions do not readily exist. How the captions may be generated to form the training dataset is described below with reference to the Figures.

In any case, the step (S102) of obtaining a training dataset comprising input images having text captions may comprise: obtaining a plurality of images, each image having a short caption that is up to 30 tokens in length, and/or a long caption that is greater than or equal to 200 tokens in length. It will be understood that the caption lengths may vary - the key is that there is a large difference between the short and long caption lengths to ensure effective training for both tasks.

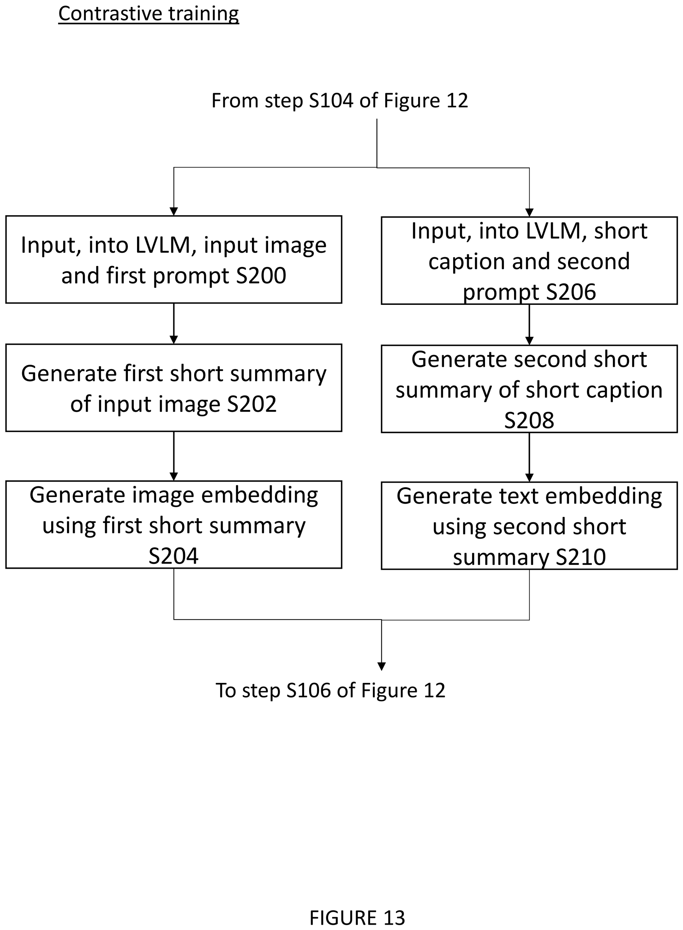

Figure 13 is a flowchart of example steps to perform parts of the contrastive training. As shown, the method begins when step S104 of Figure 12 is initiated, i.e. generating the image embedding for an image and text embedding for the short caption of the image.

Thus, the step (S104 in Figure 12) of generating an image embedding for the input image may comprise: inputting, into the LLM, the input image together with a first prompt (step S200), wherein the first prompt causes the LLM to generate a first short summary of the input image; generating, using the LLM, the first short summary of the input image (step S202); and generating, using the LLM, an image embedding for the first short summary (step S204). That is, the image embedding, $f_v$, may be obtained by passing the input image alongside a handcrafted first (image) prompt through the LVLM and taking the output representation of the last token.

The first prompt may be, for example "in one word, describe the image". Thus, inputting the input image together with a first prompt may comprise: inputting the input image together with a first prompt to generate a first single word summary of the input image.

Typically, it may not be possible to input the first prompt and image directly into the LLM and get good results. It may instead be necessary to input an initial image embedding into the LLM together with the first prompt, so that the LLM is operating on an embedding that it can understand, rather than a raw image that it may not understand. Thus, inputting the input image may comprise inputting an initial image embedding for the image into the LLM.

Preferably, the initial image embedding is generated using the part of the LVLM that is good at processing images, i.e. the vision encoder. However, the LLM may not be able to readily understand an embedding produced by a vision encoder because the embedding is based on image features and is therefore a representation in vision/image space, but the LLM operates in text space. Thus, at step S104 /step S200, the method may further comprise generating the initial image embedding by: generating, using the vision encoder, a vision embedding for the input image, wherein the vision embedding encodes vision features extracted from the input image by the vision encoder and wherein the vision embedding is in a vision embedding space; and converting, using a projector module of the LVLM, the vision embedding from the vision embedding space into the initial image embedding in a textual embedding space. Accordingly, the projector module helps the LLM to understand the output from the vision encoder.

Thus, the steps to generate an image embedding, $f_v$, that encapsulates features of the image have been described. For the contrastive training, it is also necessary to generate a text embedding, $f_t$, that encapsulates features of the short caption associates with the image. The goal of the contrastive training is to ensure that the image and text embeddings for image-text pairs are close to each other in textual embedding space.

When the text caption is a short caption, generating (at step S104) a text embedding for the short caption may comprise: inputting, into the LLM, the short caption together with a second prompt to generate a second short summary of the short caption (step S206); generating, using the LLM, the second short summary of the short caption (step S208); and generating, using the LLM, a text embedding for the second short summary (step S210). Thus, the LLM does not generate a text embedding for the short caption itself, but for a summary based on the short caption.

The second prompt may be, for example "in one word, describe the text". Thus, inputting the short caption together with a second prompt may comprise: inputting the short caption together with a second prompt to generate a second single word summary of the short caption.

As shown in Figure 13, once the embeddings have been generated, the process returns to step S106 of Figure 12 in order to minimise any difference between the image embedding generated at step S204 and the text embedding generated at step S210.

Thus, returning to Figure 12, generally speaking, the step (S106) of minimising a contrastive training loss, $\mathcal{L}_c$, may comprise: calculating a similarity between the generated image embedding and text embedding for each image having a short caption; and minimising the contrastive training loss by adjusting parameters of the LLM to increase the calculated similarity between the generated image embeddings and text embeddings. In other words, the image and text embeddings must be close if they are semantically similar, and this is enforced using a symmetric image-text and text-image contrastive loss.

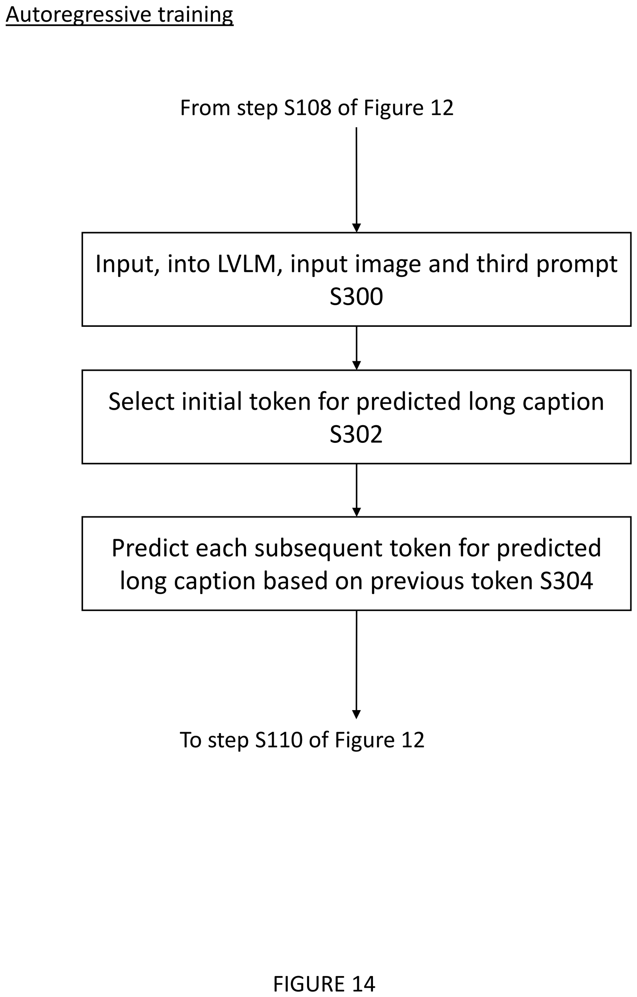

Figure 14 is a flowchart of example steps to perform parts of the autoregressive training. As shown, the method begins when step S108 of Figure 12 is initiated, i.e. generating the predicted long caption for each image having a long caption.

For the autoregressive training, it is desirable for the LLM to be able to predict a long caption for an input image, where a long caption for the input image already exists. That is, the training is used to cause the LLM to generate a long caption that is substantially similar to the existing long caption, though the LLM is only provided with the image and not the existing long caption.

Thus, the step (S108 in Figure 12) of generating, using the LLM, a predicted long caption for the input image may comprise: inputting, into the LLM, the input image together with a third prompt to generate a predicted long caption of the input image (step S300). The third prompt may be, for example "describe the image in detail".

The long caption is generate using a next-token prediction technique. Thus, it may be necessary to start the process using a <BOS> (beginning of sentence) indicator, which is used to signal the initial token for the start of generation. Thus, generating (at step S108), using the LLM, a predicted long caption for the input image may comprise: selecting an initial token (<BOS>) for the predicted long caption based on the input image and the third prompt, wherein the predicted long caption comprises a sequence of a plurality of tokens (step S302); and predicting each subsequent token in the sequence for the predicted long caption based on the previous token in the sequence (step S304).

As shown in Figure 14, once the embeddings have been generated, the process returns to step S110 of Figure 12 in order to minimise any difference between the predicted long caption and the pre-existing long caption of the image.

Thus, returning to Figure 12, generally speaking, the step (S110) of minimising an autoregressive training loss, $\mathcal{L}_{CE}$, may comprise: minimising an autoregressive training loss by adjusting parameters of the LLM to increase a probability that each token in the predicted long caption matches each token in the long caption for the input image. In other words, the autoregressive training loss enables the LLM to learn from long captions, by predicting each and every token correctly. The loss is guided by the existing long caption for the input image. That is, it is desirable for the existing long caption and the generated long caption to be similar.

Thus, generating (step S104), using the LLM, an image embedding for the input image and a text embedding for the short caption may comprise using a low-rank adapter for the LLM. As a result, minimising a contrastive training loss (step S106)using the generated image embedding and text embedding may comprise adjusting parameters of the low-rank adapter rather than the LVLM parameters directly.

Similarly, generating (step S108), using the LLM, a predicted long caption for the input image may comprise using a low-rank adapter for the LLM. As a result, minimising an autoregressive training loss (step S110) between the long caption for and the predicted long caption comprises adjusting parameters of the low-rank adapter.

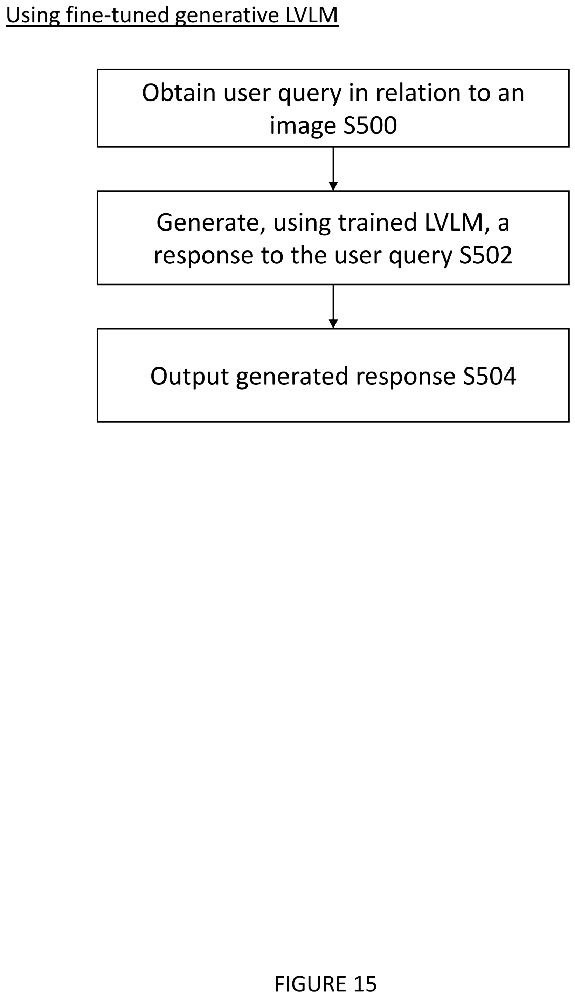

Figure 15 is a flowchart of example steps of a method for using a trained discriminative large vision language model, LVLM, on a user device, wherein the LVLM has been trained using the methods described herein (e.g. with reference to Figures 12 to 14). The method comprises: obtaining a user query in relation to an image (step S500); generating, using the trained LVLM to process the user query, a response to the user query (step S502); and outputting the generated response (step S504).

One example task for the trained LVLM is to describe or caption images. This may be useful for many purposes, such as for helping visually-impaired people to navigate different situations. Therefore, image captioning may help to improve content accessibility for people by describing the images to them.

In this example, obtaining (at step S500) a user query in relation to an image may comprise obtaining an image and a user text query to describe the image. Then, step S502 may comprise: generating, using the trained LVLM to process the user query, a long caption. Step S504 may comprise outputting the generated long caption to a display of the user device. In some cases, the generated long caption may be read out to the user via a speaker of the user device.

Another example task for the trained LVLM is to retrieve or search for images based on a user query (e.g. "find pictures of my dog running in a park"). This may help users to find images they have captured and which are stored in their image stores/photo galleries. Many users have thousands of images, and so searching for them by viewing each image would be very time-consuming.

In this example, obtaining (at step S500) a user query in relation to an image may comprise obtaining a user text query to retrieve at least one image from a plurality of images stored on the user device. Then, step S502 may comprise: generating, using the trained LVLM to process the user query, a text embedding for the user text query; and searching the plurality of images to identify an image having an image embedding that is most similar to the generated text embedding. Step S504 may comprise outputting the identified image to a display of the user device.

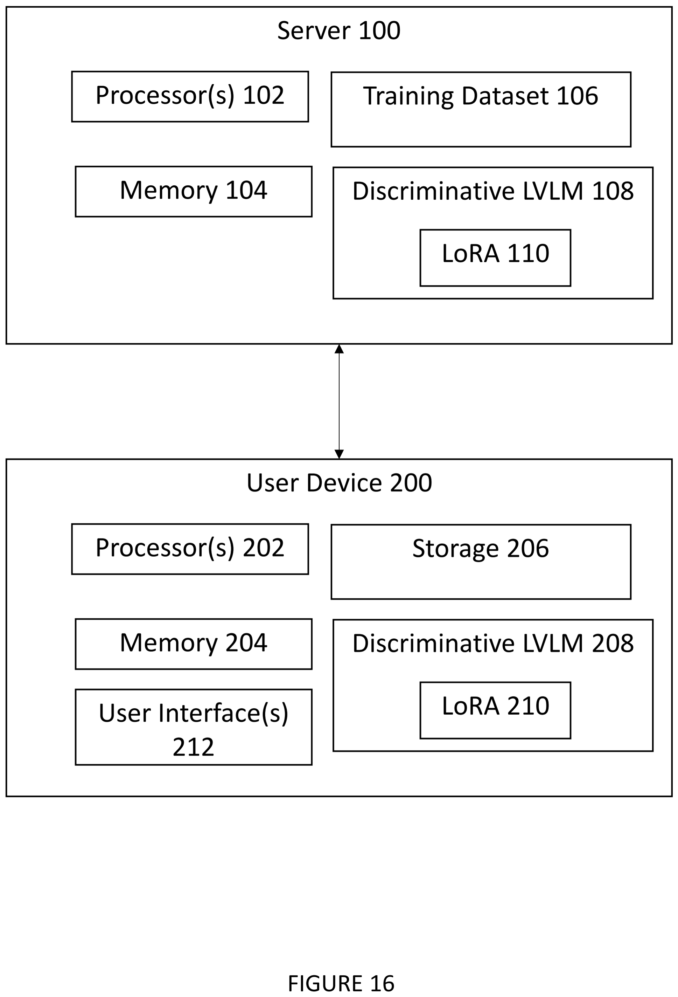

Figure 16 is a block diagram of a system for fine-tuning a pre-trained LVLM and using the fine-tuned LVLM. The system comprises a server 100 for transforming a generative large vision language model, LVLM, into a discriminative large vision language model, LVLM 108 using a training dataset 106. The LVLM 108 may be fine-tuned using a low-rank adapter 110, as explained above.

The server 100 may comprise at least one processor 102 coupled to memory 104 and arranged for implementing the methods described herein. The memory 104 may store instructions that, when executed by the at least one processor 102 individually or collectively, cause the at least one processor to perform the methods described herein.

The user device 200 may be able to use a trained discriminative large vision language model, LVLM. The user device may therefore comprise the fine-tuned LVLM 208 (with adapter 210) that has been fine-tuned by the server. As explained above, the user device 200 may comprise at least one processor 202 coupled to memory 204 and arranged for implementing the methods described herein. The user device 200 may comprise storage 206 for storing images (e.g. captured or otherwise obtained via the user device), and at least one user interface 212 (e.g. display, audio output, etc.)

References:

- Jiang et al - Ting Jiang, Minghui Song, Zihan Zhang, Haizhen Huang, Weiwei Deng, Feng Sun, Qi Zhang, Deqing Wang, and Fuzhen Zhuang. E5-v: Universal embeddings with multimodal large language models. arXiv preprint arXiv:2407.12580, 2024
- Flickr30k - Peter Young, Alice Lai, Micah Hodosh, and Julia Hockenmaier. From image descriptions to visual denotations: New similarity metrics for semantic inference over event descriptions. Transactions of the Association for Computational Linguistics, 2:67-78, 2014
- BLIP2 - Junnan Li, Dongxu Li, Silvio Savarese, and Steven Hoi. Blip-2: Bootstrapping language-image pre-training with frozen image encoders and large language models. In International conference on machine learning, pages 19730- 19742. PMLR, 2023
- ShareGPT-4V - Lin Chen, Jinsong Li, Xiaoyi Dong, Pan Zhang, Conghui He, Jiaqi Wang, Feng Zhao, and Dahua Lin. Sharegpt4v: Improving large multi-modal models with better captions. arXiv preprint arXiv:2311.12793, 2023.
- LoRA - Edward J Hu, Yelong Shen, Phillip Wallis, Zeyuan AllenZhu, Yuanzhi Li, Shean Wang, Lu Wang, and Weizhu Chen. Lora: Low-rank adaptation of large language models. arXiv preprint arXiv:2106.09685, 2021
- CLIP (ViT-L) - Alec Radford, Jong Wook Kim, Chris Hallacy, Aditya Ramesh, Gabriel Goh, Sandhini Agarwal, Girish Sastry, Amanda Askell, Pamela Mishkin, Jack Clark, et al. Learning transferable visual models from natural language supervision. In International conference on machine learning, pages 8748-8763. PMLR, 2021
- BLIP (ViT-L) - Junnan Li, Dongxu Li, Caiming Xiong, and Steven Hoi. Blip: Bootstrapping language-image pre-training for unified vision-language understanding and generation. In International conference on machine learning, pages 12888-12900. PMLR, 2022
- OpenCLIP (ViT-G/14) - Christoph Schuhmann, Romain Beaumont, Richard Vencu, Cade Gordon, Ross Wightman, Mehdi Cherti, Theo Coombes, Aarush Katta, Clayton Mullis, Mitchell Wortsman, et al. Laion-5b: An open large-scale dataset for training next generation image-text models. Advances in Neural Information Processing Systems,
- EVA-02-CLIP (ViT-E/14+) - Quan Sun, Yuxin Fang, Ledell Wu, Xinlong Wang, and Yue Cao. Eva-clip: Improved training techniques for clip at scale. arXiv preprint arXiv:2303.15389, 2023
- EVA-CLIP (8B) and EVA-CLIP (18B) - Quan Sun, Jinsheng Wang, Qiying Yu, Yufeng Cui, Fan Zhang, Xiaosong Zhang, and Xinlong Wang. Eva-clip-18b: Scaling clip to 18 billion parameters. arXiv preprint arXiv:2402.04252, 2024
- NegCLIP - Mert Yuksekgonul, Federico Bianchi, Pratyusha Kalluri, Dan Jurafsky, and James Zou. When and why vision-language models behave like bags-of-words, and what to do about it? arXiv preprint arXiv:2210.01936, 2022.
- LLaVA-1.5 (7B) - Haotian Liu, Chunyuan Li, Qingyang Wu, and Yong Jae Lee. Visual instruction tuning. Advances in neural information processing systems, 36, 2024
- AdamW - I Loshchilov. Decoupled weight decay regularization. arXiv preprint arXiv:1711.05101, 2017
- Cosine scheduler - Ilya Loshchilov and Frank Hutter. Sgdr: Stochastic gradient descent with warm restarts. arXiv preprint arXiv:1608.03983, 2016
- PyTorch - Adam Paszke, Sam Gross, Francisco Massa, Adam Lerer, James Bradbury, Gregory Chanan, Trevor Killeen, Zeming Lin, Natalia Gimelshein, Luca Antiga, et al. Pytorch: An imperative style, high-performance deep learning library. Advances in neural information processing systems, 32, 2019
- DeepSpeed - Jeff Rasley, Samyam Rajbhandari, Olatunji Ruwase, and Yuxiong He. Deepspeed: System optimizations enable training deep learning models with over 100 billion parameters. In Proceedings of the 26th ACM SIGKDD International Conference on Knowledge Discovery & Data Mining, pages 3505-3506, 2020.
- OpenImages - Alina Kuznetsova, Hassan Rom, Neil Alldrin, Jasper Uijlings, Ivan Krasin, Jordi Pont-Tuset, Shahab Kamali, Stefan Popov, Matteo Malloci, Alexander Kolesnikov, et al. The open images dataset v4: Unified image classification, object detection, and visual relationship detection at scale. International journal of computer vision, 128(7):1956-1981

- CC3M (~2.8M images) - Piyush Sharma, Nan Ding, Sebastian Goodman, and Radu Soricut. Conceptual captions: A cleaned, hypernymed, image alt-text dataset for automatic image captioning. In Proceedings of the 56th Annual Meeting of the Association for Computational Linguistics (Volume 1: Long Papers), pages 2556-2565, 2018.
- MS-COCO - Tsung-Yi Lin, Michael Maire, Serge Belongie, James Hays, Pietro Perona, Deva Ramanan, Piotr Dollar, and C Lawrence ' Zitnick. Microsoft coco: Common objects in context. In Computer Vision-ECCV 2014: 13th European Conference, Zurich, Switzerland, September 6-12, 2014, Proceedings, Part V 13, pages 740-755. Springer, 2014
- nocaps - Harsh Agrawal, Karan Desai, Yufei Wang, Xinlei Chen, Rishabh Jain, Mark Johnson, Dhruv Batra, Devi Parikh, Stefan Lee, and Peter Anderson. Nocaps: Novel object captioning at scale. In Proceedings of the IEEE/CVF international conference on computer vision, pages 8948-8957, 2019
- SugarCrepe - Cheng-Yu Hsieh, Jieyu Zhang, Zixian Ma, Aniruddha Kembhavi, and Ranjay Krishna. Sugarcrepe: Fixing hackable benchmarks for vision-language compositionality. Advances in neural information processing systems, 36, 2024.
- SugarCrepe++ - Sri Harsha Dumpala, Aman Jaiswal, Chandramouli Sastry, Evangelos Milios, Sageev Oore, and Hassan Sajjad. Sugarcrepe++ dataset: Vision-language model sensitivity to semantic and lexical alterations. arXiv preprint arXiv:2406.11171, 2024. 7

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for generating a discriminative large vision language model, LVLM, for performing image-based tasks, the method comprising:

    obtaining a pre-trained generative LVLM for generating images and/or text, wherein the pre-trained generative LVLM comprises:

    a large language model, LLM, and
    a vision encoder;

    obtaining a training dataset comprising input images, wherein each input image has at least one text caption and wherein each text caption is either a short caption or a long caption; and
    training the pre-trained generative LVLM to perform discriminative image-based tasks, by:

    for each input image of the training dataset having a short caption:

    generating, using the LVLM, an image embedding for the input image and a text embedding for the short caption; and
    minimising a contrastive training loss using the generated image embedding and text embedding; and

    for each input image of the training dataset having a long caption:

    generating, using the LLM, a predicted long caption for the input image; and
    minimising an autoregressive training loss between the long caption for and the predicted long caption;
    wherein the contrastive training loss and autoregressive training loss are minimised jointly.

2. The method as claimed in claim 1 wherein generating an image embedding for the input image comprises:

    inputting, into the LLM, the input image together with a first prompt, wherein the first prompt causes the LLM to generate a first short summary of the input image;
    generating, using the LLM, the first short summary of the input image; and
    generating, using the LLM, an image embedding for the first short summary.

3. The method as claimed in claim 2 wherein inputting the input image together with a first prompt comprises:
inputting the input image together with a first prompt to generate a first single word summary of the input image.

4. The method as claimed in claim 2 or 3 wherein inputting the input image comprises inputting an initial image embedding for the image into the LLM.

5. The method as claimed in claim 4 further comprising generating the initial image embedding by:

generating, using the vision encoder, a vision embedding for the input image, wherein the vision embedding encodes vision features extracted from the input image by the vision encoder and wherein the vision embedding is in a vision embedding space; and
converting, using a projector module of the LVLM, the vision embedding from the vision embedding space into the initial image embedding in a textual embedding space.

6. The method as claimed in any preceding claim wherein when the text caption is a short caption, generating a text embedding for the short caption comprises:

inputting, into the LLM, the short caption together with a second prompt to generate a second short summary of the short caption;
generating, using the LLM, the second short summary of the short caption; and
generating, using the LLM, a text embedding for the second short summary.

7. The method as claimed in claim 6 wherein inputting the short caption together with a second prompt comprises:
inputting the short caption together with a second prompt to generate a second single word summary of the short caption.

8. The method as claimed in any preceding claim wherein minimising a contrastive training loss comprises:

calculating a similarity between the generated image embedding and text embedding for each image having a short caption; and
minimising the contrastive training loss by adjusting parameters of the LLM to increase the calculated similarity between the generated image embeddings and text embeddings.

9. The method as claimed in any preceding claim wherein generating, using the LLM, a predicted long caption for the input image comprises:
inputting, into the LLM, the input image together with a third prompt to generate a predicted long caption of the input image.

10. The method as claimed in claim 9 wherein generating, using the LLM, a predicted long caption for the input image comprises:

selecting an initial token for the predicted long caption based on the input image and the third prompt, wherein the predicted long caption comprises a sequence of a plurality of tokens; and
predicting each subsequent token in the sequence for the predicted long caption based on the previous token in the sequence.

11. The method as claimed in claim 10 wherein minimising an autoregressive training loss comprises:
minimising an autoregressive training loss by adjusting parameters of the LLM to increase a probability that each token in the predicted long caption matches each token in the long caption for the input image.

12. The method as claimed in any preceding claim wherein:

generating, using the LLM, an image embedding for the input image and a text embedding for the short caption comprises using a low-rank adapter for the LLM;
minimising a contrastive training loss using the generated image embedding and text embedding comprises adjusting parameters of the low-rank adapter;
generating, using the LLM, a predicted long caption for the input image comprises using the low-rank adapter for the LLM; and

minimising an autoregressive training loss between the long caption for and the predicted long caption comprises adjusting parameters of the low-rank adapter.

13. A computer-implemented method for using a trained discriminative large vision language model, LVLM, on a user device, wherein the LVLM has been trained using the method of any of claims 1 to 12, the method comprising:

obtaining a user query in relation to an image;
generating, using the trained LVLM to process the user query, a response to the user query; and
outputting the generated response.

14. The method as claimed in claim 13 wherein:

obtaining a user query in relation to an image comprises obtaining an image and a user text query to describe the image;
generating, using the trained LVLM to process the user query, a long caption; and
outputting the generated long caption to a display of the user device.

15. The method as claimed in claim 13 wherein:

obtaining a user query in relation to an image comprises obtaining a user text query to retrieve at least one image from a plurality of images stored on the user device;
generating, using the trained LVLM to process the user query, a text embedding for the user text query;
searching the plurality of images to identify an image having an image embedding that is most similar to the generated text embedding; and
outputting the identified image to a display of the user device.

FIGURE 1

FIGURE 2

FIGURE 3

FIGURE 4

FIGURE 5

**Template for the image modality:**
USER: [Image Prompt] <image>
ASSISTANT: <out_token>
USER: Describe the image in detail.
ASSISTANT: <long_caption>

**Template for the text modality:**
USER: [Text Prompt] <short_caption>
ASSISTANT: <out_token>

FIGURE 6

| Method | image retrieval | | | | | | text retrieval | | | | | |
|---|---|---|---|---|---|---|---|---|---|---|---|---|
| | Flickr30K | | COCO | | nocaps | | Flickr30K | | COCO | | nocaps | |
| | R@1 | R@10 | R@1 | R@10 | R@1 | R@10 | R@1 | R@10 | R@1 | R@10 | R@1 | R@10 |
| CLIP (ViT-L) | 67.3 | 93.3 | 37.0 | 71.5 | 48.6 | 85.7 | 87.2 | 99.4 | 58.1 | 87.8 | 70.0 | 96.2 |
| BLIP (ViT-L) | 70.0 | 95.2 | 48.4 | 83.2 | 62.3 | 93.4 | 75.5 | 97.7 | 63.5 | 92.5 | 72.1 | 97.7 |
| BLIP2 (ViT-L) | 74.5 | 97.2 | 50.0 | 86.1 | 63.0 | 93.8 | 86.1 | 99.4 | 63.0 | 93.1 | 74.4 | 98.3 |
| OpenCLIP (ViT-BigG/14) | 79.5 | 97.1 | 51.3 | 83.0 | 65.1 | 93.5 | 92.9 | 97.1 | 67.3 | 92.6 | 82.3 | 98.8 |
| EVA-02-CLIP (ViT-E/14+) | 78.8 | 96.8 | 51.1 | 82.7 | 64.5 | 92.9 | 93.9 | 99.8 | 68.8 | 92.8 | 83.0 | 98.9 |
| EVA-CLIP (8B) | 80.3 | 97.2 | 52.0 | 82.9 | 65.3 | 93.2 | 94.5 | 99.7 | 70.1 | 93.1 | 83.5 | 98.6 |
| EVA-CLIP (18B) | 83.3 | 97.9 | 55.6 | 85.2 | 69.3 | 94.8 | **95.3** | 99.8 | 72.8 | 94.2 | 85.6 | 99.2 |
| LLaVA-1.5-7B | 59.6 | 89.3 | 34.4 | 69.6 | 46.9 | 83.3 | 65.6 | 92.3 | 35.6 | 70.5 | 52.1 | 88.1 |
| VLM2Vec (Mistral-7B) | 80.1 | 97.3 | 52.0 | 85.6 | 65.9 | 94.5 | 90.3 | 99.6 | 68.2 | 93.2 | 79.2 | 98.5 |
| E5-V (LLaVA-Next-8B) | 79.5 | 97.6 | 52.0 | 84.7 | 65.9 | 94.3 | 88.2 | 99.4 | 62.0 | 89.7 | 74.9 | 98.3 |
| E5-V (LLaVA-1.5-7B) | 76.7 | 96.9 | 48.2 | 82.1 | 62.0 | 93.0 | 86.6 | 99.0 | 57.4 | 88.4 | 71.9 | 97.0 |
| VladVA (Ours) (LLaVA-1.5-7B) | **85.0** | **98.5** | **59.0** | **88.6** | **72.3** | **96.5** | 94.3 | **99.9** | **72.9** | **94.4** | **85.7** | **99.5** |

FIGURE 7

| Method | Params | Replace | | | Swap | | Add | |
|---|---|---|---|---|---|---|---|---|
| | (B) | Object | Attribute | Relation | Object | Attribute | Object | Attribute |
| CLIP (ViT-L) | 0.43 | 94.1 | 79.2 | 65.2 | 60.2 | 62.3 | 78.3 | 71.5 |
| BLIP (ViT-L) | 0.23 | 96.5 | 81.7 | 69.1 | 66.6 | 76.8 | 92.0 | 85.1 |
| BLIP2 (ViT-L) | 1.17 | 97.6 | 81.7 | 77.8 | 62.1 | 65.5 | 92.4 | 87.4 |
| OpenCLIP (ViT-BigG/14) | 2.54 | 96.6 | 87.9 | 74.9 | 62.5 | 75.2 | 92.2 | 84.5 |
| EVA-02-CLIP (ViT-E/14+) | 5.04 | 97.1 | 88.5 | 74.2 | 67.3 | 74.1 | 91.8 | 83.9 |
| EVA-CLIP (8B) | 8.22 | 96.4 | 86.6 | 74.8 | 66.1 | 74.6 | 91.3 | 82.0 |
| EVA-CLIP ((18B) | 18.3 | 97.5 | 88.8 | 76.1 | 65.3 | 76.0 | 92.4 | 85.0 |
| NegCLIP | 0.15 | 92.7 | 85.9 | 76.5 | 75.2 | 75.4 | 88.8 | 82.8 |
| LLaVA-1.5-7B | 7.06 | 88.0 | 81.6 | 76.1 | 60.9 | 58.8 | 67.0 | 62.4 |
| VLM2Vec (Mistral-7B) | 7.30 | 97.2 | 89.0 | 81.7 | 62.9 | 72.5 | 94.7 | 88.6 |
| E5-V (LLaVA-Next-8B) | 8.36 | 96.7 | 89.5 | 85.3 | 75.0 | 70.1 | 89.2 | 83.5 |
| E5-V (LLaVA-1.5-7B) | 7.06 | 95.8 | 86.6 | 81.6 | 62.9 | 64.0 | 93.5 | 88.0 |
| VladVA (Ours) (LLaVA-1.5-7B) | 7.06 | **98.1** | **92.1** | **86.8** | **79.0** | **82.9** | **95.2** | **95.8** |

FIGURE 8

| Method | Params (B) | Swap Object | | Swap Attribute | | Replace Object | | Replace Attribute | | Replace Relation | |
|---|---|---|---|---|---|---|---|---|---|---|---|
| | | ITT | TOT | ITT | TOT | ITT | TOT | ITT | TOT | ITT | TOT |
| CLIP (ViT-L) | 0.43 | 46.0 | 14.5 | 44.5 | 28.7 | 92.0 | 81.3 | 68.8 | 56.3 | 53.4 | 39.1 |
| BLIP (ViT-L) | 0.23 | 46.8 | 29.8 | 60.1 | 52.5 | 92.6 | 89.1 | 71.7 | 75.0 | 56.8 | 57.7 |
| BLIP2 (ViT-L) | 1.17 | 37.9 | 39.5 | 51.9 | 55.4 | 94.8 | 96.9 | 73.2 | 86.5 | 65.1 | 69.6 |
| OpenCLIP (ViT-BigG/14) | 2.54 | 48.8 | 28.2 | 57.7 | 52.4 | 94.2 | 90.5 | 76.4 | 72.6 | 59.4 | 53.6 |
| EVA-02-CLIP (ViT-E/14+) | 5.04 | 48.4 | 28.2 | 56.3 | 49.4 | 94.5 | 88.9 | 76.3 | 70.6 | 59.4 | 49.4 |
| EVA-CLIP (8B) | 8.22 | 43.6 | 25.4 | 55.2 | 46.9 | 93.7 | 85.8 | 73.4 | 67.9 | 59.7 | 49.2 |
| EVA-CLIP (18B) | 18.3 | 45.2 | 25.4 | 55.5 | 47.6 | 94.1 | 85.1 | 77.0 | 69.8 | 60.4 | 47.8 |
| NegCLIP | 0.15 | 55.3 | 34.7 | 58.0 | 56.5 | 89.5 | 94.5 | 69.4 | 76.3 | 52.3 | 51.6 |
| LLaVA-1.5-7B | 7.06 | 23.8 | 30.7 | 28.0 | 29.5 | 58.1 | 63.0 | 46.8 | 58.1 | 52.3 | 63.4 |
| VLM2Vec (Mistral-7B) | 7.30 | 40.7 | 39.9 | 48.1 | 50.0 | 94.6 | 96.9 | 77.0 | 85.6 | 67.9 | 70.7 |
| E5-V (LLaVA-Next-8B) | 8.36 | 50.8 | **48.4** | 49.7 | 56.9 | 93.1 | **97.6** | 76.1 | **87.1** | **74.7** | **84.4** |
| E5-V (LLaVA-1.5-7B) | 7.06 | 39.5 | 42.3 | 40.7 | 48.5 | 89.7 | 94.6 | 71.7 | 86.4 | 72.0 | 81.5 |
| VladVA (Ours) (LLaVA-1.5-7B) | 7.06 | **56.1** | 36.7 | **63.0** | **62.5** | **95.0** | 93.0 | **78.2** | 82.3 | 71.1 | 66.3 |

FIGURE 9

EP 4 742 185 A1

| Method | AR loss | SugarCrepe | | | Flickr30k | |
|---|---|---|---|---|---|---|
| | | Replace | Swap | Add | T2I | I2T |
| LLaVA-1.5-7B | ✗ | 81.9 | 59.8 | 64.7 | 59.6 | 65.6 |
| + soft-prom. | ✗ | 86.4 | 66.9 | 89.3 | 76.7 | 91.7 |
| + adapter-ft. | ✗ | 87.0 | 69.8 | 88.8 | 79.1 | 91.4 |
| + adapter-ft. + soft-prom. | ✗ | 87.1 | 72.0 | 88.6 | 79.6 | **92.9** |
| + adapter-ft. + soft-prom. | ✓ | **89.5** | **75.5** | **89.5** | **80.6** | 91.8 |

FIGURE 10

| Training data | SugarCrepe | | | Flickr30k | |
|---|---|---|---|---|---|
| | Replace | Swap | Add | T2I | I2T |
| LLava-1.5-7B (0M) | 81.9 | 59.8 | 64.7 | 59.6 | 65.6 |
| OpenImages (1M) | 87.1 | 72.0 | 88.6 | 79.6 | 92.9 |
| OpenImages (4M) | 88.2 | 79.6 | 89.1 | 82.3 | 93.1 |
| + ShareGPT-4V (1.3M) | 91.0 | 80.3 | 92.4 | 83.1 | 94.0 |
| + CC3M (2.8M) | **92.3** | **80.9** | **95.5** | **85.0** | **94.3** |

FIGURE 11

Fine-tuning a pre-trained generative LVLM

Obtain pre-trained LVLM S100

Obtain training dataset comprising images, each image having a short and/or long caption S102

Generating an image embedding for each image and a text embedding for its short caption S104

Generating predicted long caption for each image having a long caption S108

Minimise contrastive training loss between image and text embeddings S106

Minimise autoregressive training loss between long caption and predicted long caption S110

FIGURE 12

Contrastive training

From step S104 of Figure 12

| Input, into LVLM, input image and first prompt S200 | Input, into LVLM, short caption and second prompt S206 |

| Generate first short summary of input image S202 | Generate second short summary of short caption S208 |

| Generate image embedding using first short summary S204 | Generate text embedding using second short summary S210 |

To step S106 of Figure 12

FIGURE 13

Autoregressive training

From step S108 of Figure 12

Input, into LVLM, input image and third prompt S300

Select initial token for predicted long caption S302

Predict each subsequent token for predicted long caption based on previous token S304

To step S110 of Figure 12

FIGURE 14

## Using fine-tuned generative LVLM

Obtain user query in relation to an
image S500

Generate, using trained LVLM, a
response to the user query S502

Output generated response S504

FIGURE 15

# Server 100

| Processor(s) 102 | Training Dataset 106 |

| Memory 104 | Discriminative LVLM 108 |
| | LoRA 110 |

# User Device 200

| Processor(s) 202 | Storage 206 |

| Memory 204 | Discriminative LVLM 208 |
| User Interface(s) 212 | LoRA 210 |

FIGURE 16

**EUROPEAN SEARCH REPORT**

Application Number

EP 25 21 0040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YI CHEN ET AL: "EgoPlan-Bench: Benchmarking Multimodal Large Language Models for Human-Level Planning", ARXIV.ORG, CORNELL UNIVERSITY LIBRARY, 201 OLIN LIBRARY CORNELL UNIVERSITY ITHACA, NY 14853, 11 June 2024 (2024-06-11), XP091781948, * abstract * * page 1 - page 9 * * figures 1,2,3,9 * | 1-15 | INV. G06V10/82 G06F40/284 G06N3/08 |
| A | TIANYI BAI ET AL: "A Survey of Multimodal Large Language Model from A Data-centric Perspective", ARXIV.ORG, CORNELL UNIVERSITY LIBRARY, 201 OLIN LIBRARY CORNELL UNIVERSITY ITHACA, NY 14853, 18 July 2024 (2024-07-18), XP091820496, * page 2 - page 16 * * figures 1,2 * | 1-15 | |

TECHNICAL FIELDS SEARCHED (IPC)

G06V
G06E
G06F
G06N

The present search report has been drawn up for all claims

| Place of search | Date of completion of the search | Examiner |
|---|---|---|
| The Hague | 16 February 2026 | Karwe, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TING JIANG ; MINGHUI SONG ; ZIHAN ZHANG ; HAIZHEN HUANG ; WEIWEI DENG ; FENG SUN ; QI ZHANG ; DEQING WANG ; FUZHEN ZHUANG**. E5-v: Universal embeddings with multimodal large language models. *arXiv:2407.12580*, 2024
- **PETER YOUNG ; ALICE LAI ; MICAH HODOSH ; JULIA HOCKENMAIER**. From image descriptions to visual denotations: New similarity metrics for semantic inference over event descriptions. *Transactions of the Association for Computational Linguistics*, 2014, vol. 2, 67-78
- **JUNNAN LI ; DONGXU LI ; SILVIO SAVARESE ; STEVEN HOI**. Blip-2: Bootstrapping language-image pre-training with frozen image encoders and large language models. *International conference on machine learning*, 2023, 19730-19742
- **LIN CHEN ; JINSONG LI ; XIAOYI DONG ; PAN ZHANG ; CONGHUI HE ; JIAQI WANG ; FENG ZHAO ; DAHUA LIN**. Sharegpt4v: Improving large multi-modal models with better captions. *arXiv:2311.12793*, 2023
- **EDWARD J HU ; YELONG SHEN ; PHILLIP WALLIS ; ZEYUAN ALLENZHU ; YUANZHI LI ; SHEAN WANG ; LU WANG ; WEIZHU CHEN**. Lora: Low-rank adaptation of large language models. *arXiv:2106.09685*, 2021
- **ALEC RADFORD ; JONG WOOK KIM ; CHRIS HALLACY ; ADITYA RAMESH ; GABRIEL GOH ; SANDHINI AGARWAL ; GIRISH SASTRY ; AMANDA ASKELL ; PAMELA MISHKIN ; JACK CLARK et al.** Learning transferable visual models from natural language supervision. *International conference on machine learning*, 2021, 8748-8763
- **JUNNAN LI ; DONGXU LI ; CAIMING XIONG ; STEVEN HOI**. Blip: Bootstrapping language-image pre-training for unified vision-language understanding and generation. *International conference on machine learning*, 2022, 12888-12900
- **CHRISTOPH SCHUHMANN ; ROMAIN BEAUMONT ; RICHARD VENCU ; CADE GORDON ; ROSS WIGHTMAN ; MEHDI CHERTI ; THEO COOMBES ; AARUSH KATTA ; CLAYTON MULLIS ; MITCHELL WORTSMAN et al.** Laion-5b: An open large-scale dataset for training next generation image-text models. *Advances in Neural Information Processing Systems*
- **QUAN SUN ; YUXIN FANG ; LEDELL WU ; XINLONG WANG ; YUE CAO**. Eva-clip: Improved training techniques for clip at scale. *arXiv:2303.15389*, 2023
- **QUAN SUN ; JINSHENG WANG ; QIYING YU ; YUFENG CUI ; FAN ZHANG ; XIAOSONG ZHANG ; XINLONG WANG**. Eva-clip-18b: Scaling clip to 18 billion parameters. *arXiv:2402.04252*, 2024
- **MERT YUKSEKGONUL ; FEDERICO BIANCHI ; PRATYUSHA KALLURI ; DAN JURAFSKY ; JAMES ZOU**. When and why vision-language models behave like bags-of-words, and what to do about it?. *arXiv:2210.01936*, 2022
- **HAOTIAN LIU ; CHUNYUAN LI ; QINGYANG WU ; YONG JAE LEE**. Visual instruction tuning. *Advances in neural information processing systems*, 2024, vol. 36
- **I LOSHCHILOV**. Decoupled weight decay regularization. *arXiv:1711.05101*, 2017
- **ILYA LOSHCHILOV ; FRANK HUTTER**. Sgdr: Stochastic gradient descent with warm restarts. *arXiv:1608.03983*, 2016
- **ADAM PASZKE ; SAM GROSS ; FRANCISCO MASSA ; ADAM LERER ; JAMES BRADBURY ; GREGORY CHANAN ; TREVOR KILLEEN ; ZEMING LIN ; NATALIA GIMELSHEIN ; LUCA ANTIGA et al.** Pytorch: An imperative style, high-performance deep learning library. *Advances in neural information processing systems*, 2019, vol. 32
- **JEFF RASLEY ; SAMYAM RAJBHANDARI ; OLATUNJI RUWASE ; YUXIONG HE**. Deepspeed: System optimizations enable training deep learning models with over 100 billion parameters. *Proceedings of the 26th ACM SIGKDD International Conference on Knowledge Discovery & Data Mining*, 2020, 3505-3506
- **ALINA KUZNETSOVA ; HASSAN ROM ; NEIL ALLDRIN ; JASPER UIJLINGS ; IVAN KRASIN ; JORDI PONT-TUSET ; SHAHAB KAMALI ; STEFAN POPOV ; MATTEO MALLOCI ; ALEXANDER KOLESNIKOV et al.** The open images dataset v4: Unified image classification, object detection, and visual relationship detection at scale. *International journal of computer vision*, vol. 128 (7), 1956-1981

- **PIYUSH SHARMA** ; **NAN DING** ; **SEBASTIAN GOODMAN** ; **RADU SORICUT**. Conceptual captions: A cleaned, hypernymed, image alt-text dataset for automatic image captioning. *Proceedings of the 56th Annual Meeting of the Association for Computational Linguistics*, 2018, vol. 1, 2556-2565
- Zitnick. Microsoft coco: Common objects in context. **TSUNG-YI LIN** ; **MICHAEL MAIRE** ; **SERGE BELONGIE** ; **JAMES HAYS** ; **PIETRO PERONA** ; **DEVA RAMANAN** ; **PIOTR DOLLAR** ; **C LAWRENCE**. Computer Vision-ECCV 2014: 13th European Conference, Zurich, Switzerland, September 6-12, 2014, Proceedings, Part V. Springer, 06 September 2014, vol. 13, 740-755

- **HARSH AGRAWAL** ; **KARAN DESAI** ; **YUFEI WANG** ; **XINLEI CHEN** ; **RISHABH JAIN** ; **MARK JOHNSON** ; **DHRUV BATRA** ; **DEVI PARIKH** ; **STEFAN LEE** ; **PETER ANDERSON**. Nocaps: Novel object captioning at scale. *Proceedings of the IEEE/CVF international conference on computer vision*, 2019, 8948-8957
- **CHENG-YU HSIEH** ; **JIEYU ZHANG** ; **ZIXIAN MA** ; **ANIRUDDHA KEMBHAVI** ; **RANJAY KRISHNA**. Sugarcrepe: Fixing hackable benchmarks for vision-language compositionality. *Advances in neural information processing systems*, 2024, vol. 36
- **SRI HARSHA DUMPALA** ; **AMAN JAISWAL** ; **CHANDRAMOULI SASTRY** ; **EVANGELOS MILIOS** ; **SAGEEV OORE** ; **HASSAN SAJJAD**. Sugarcrepe++ dataset: Vision-language model sensitivity to semantic and lexical alterations. *arXiv:2406.11171*, 2024, 7